# EUROPÄISCHE PATENTSCHRIFT

(11) **EP 2 877 377 B1**
(45) Veröffentlichungstag und Bekanntmachung des Hinweises auf die Patenterteilung: **29.05.2019**
(21) Anmeldenummer: 13739432.6
(22) Anmeldetag: 19.07.2013
(51) Int. Cl.: B60T 7/08, B60T 7/10, B60T 15/04, B60T 17/18, B60T 17/22

(54) **PARKBREMSVENTIL MIT SIGNALISIERUNG EINER NICHT VOLLSTÄNDIG ERREICHTEN PARKBREMSSTELLUNG**
PARKING BRAKE VALVE SENSING INCOMPLETE POSITIONING OF THE PARKING BRAKE
SOUPAPE DE FREINAGE DE PARKING AVEC SIGNALISATION DE POSITION INCOMPLETE DU FREIN DE PARKING

(30) Priorität: 26.07.2012 DE 102012014883
(43) Veröffentlichungstag der Anmeldung: 03.06.2015
(73) Patentinhaber: KNORR-BREMSE Systeme für Nutzfahrzeuge GmbH, 80809 München (DE)
(72) Erfinder: ANDREETTA, Giorgio, I-20853 Biassono (MB) (IT); CONSONNI, Francesco, I-24030 Medolago (BG) (IT); LAPADATU, Daniela, I-20853 Biassono (MB) (IT)
(86) Internationale Anmeldenummer: PCT/EP2013/065358
(87) Internationale Veröffentlichungsnummer: WO 2014/016225

(56) Entgegenhaltungen:
- EP-A1- 1 529 705
- DE-A1- 3 346 018
- DE-A1- 3 431 559

## Beschreibung

Die Erfindung betrifft eine Parkbremseinrichtung eines Fahrzeugs mit einem pneumatischen Parkbremsventil, welches einen an einer Schaltkulisse eines Ventilgehäuses in unterschiedliche Schwenkpositionen schwenkbar geführten und mit einem Steuerkörper zur Betätigung eines Parkbremsventilmechanismus verbundenen Bedienhebel aufweist, mit einem Mechanismus zum Einrasten und Lösen eines Rastkörpers bezüglich einer Kulissenöffnung der Schaltkulisse wenigstens in einer den Betriebszustand "Parken" repräsentierenden Schwenkposition des Bedienhebels, gemäß dem Oberbegriff von Anspruch 1.

Ein Parkbremsventil ist beispielsweise aus der DE 3 431 559 A1 bekannt. Derartige Parkbremsventile dienen zur Betätigung einer mit Federspeicherbremszylindern ausgerüsteten Parkbremseinrichtung oder einer kombinierten Park- und Hilfsbremseinrichtung, welche durch Betätigung des Parkbremsventils feinfühlig abstufbar ist und gleichzeitig zur Betätigung der Anhänger-Bremsanlage verwendet werden kann.

Bei einer kombinierten Park- und Hilfsbremseinrichtung wird der Bedienhebel des Parkbremsventils ausgehend von einer Schwenkstellung "Fahren" in eine Schwenkstellung "Hilfsbremsen" verschwenkt, wobei in diesem Drehbereich ein feinfühlig abgestuftes Betätigen der Park- und Hilfsbremseinrichtung als auch der durch das Parkbremsventil steuerbaren Anhänger-Bremsanlage möglich ist. Bei Erreichen der Schwenkstellung "Parken" ist eine absolut sichere Verriegelung des Kipphebels erforderlich, um ein unbeabsichtigtes Lösen der Bremsanlage zu verhindern. Aus der vorgenannten Feststell- bzw. Parkbremsstellung kann der Bedienhebel weiter in eine Test- oder Kontrollstellung bewegt werden; in dieser Stellung gestattet das Parkbremsventil bei eingelegter Parkbremse eine Kontrolle der alleinigen Bremswirkung der Bremsanlage des Zugfahrzeuges bei gelöster Bremse im Anhänger.

Die Schwenkbewegungen des Bedienhebels unter Führung der Schaltkulisse werden mit Hilfe eines am äußeren Ende des Bedienhebels angeordneten Schaltgriffes vollzogen, wobei der Schaltgriff bei Einschwenken des Bedienhebels in die der Parkbremsstellung entsprechende Kulissenöffnung der Schaltkulisse in diese eintaucht. Der Abstand des Schaltgriffes zum Gehäusekopf verkürzt sich also etwas, wenn die Parkbremsstellung erreicht ist. Ein im Bereich der Schaltkulisse mit dieser zusammenwirkender, über eine Hülse mit dem Schaltgriff verbundener Rastkörper taucht entsprechend der nach innen gerichteten Bewegung des Schaltgriffes unter der Verspannung einer Feder in die Kulissenöffnung ein, um hierdurch die der Parkbremsstellung entsprechende Winkelposition des Schaltgriffes zu rastieren. Der Rastkörper kann also nur dann entriegelt werden, wenn der ihn tragende Schaltgriff auf sein ursprüngliches Niveau wieder nach außen gerichtet gezogen wird. Mit Hilfe des Schaltgriffes ist es daher möglich, den Rastkörper aus der Kulissenöffnung herauszuziehen, d.h. auf das Niveau der Oberseite der Schaltkulisse anzuheben, wenn der Bedienhebel aus dem Bereich der Parkbremsstellung in die Fahr- oder Lösestellung verschwenkt werden soll.

Bei Parkbremsventilen, welche bei Verwendung in Nutzfahrzeugen einem verhältnismäßig rauen Betrieb unterliegen, ist es unbedingt erforderlich, dass der Rastkörper in Position der Parkbremsstellung tatsächlich innerhalb der Kulissenöffnung der Schaltkulisse einrastet, also nach innen gerichtet eintaucht. Wenn der Fahrer den Schaltgriff am Bedienhebel des Parkbremsventils aus der Fahr- oder Lösestellung in Richtung der Parkbremsstellung verschwenkt, dann kann es allerdings vorkommen, dass er nicht nur eine reine, in Umfangrichtung verlaufende Drehbewegung vollführt, sondern dass er gleichzeitig unbeabsichtigt am Schaltgriffende zieht. Da der Rastkörper mit dem Schaltgriff des Bedienhebels verbunden ist, kann hierdurch das selbsttätige Eintauchen des Rastkörpers in die Kulissenöffnung gestört sein. Hierbei leidet die Feinfühligkeit in der Parkbremsventilbetätigung, d.h. es kann unter Umständen problematisch sein, sich darüber zu vergewissern, ob die selbsttätige Rastierung im Bereich der Parkstellung erreicht ist oder nicht. Damit kann nicht immer sichergestellt werden, dass der Rastkörper trotz in der Schwenkstellung "Parken" befindlichem Bedienhebel tatsächlich vollständig in der Kulissenöffnung eingerastet ist, so dass sich der Bedienhebel bedingt durch die Federvorspannung aus der Schwenkstellung "Parken" lösen und in Richtung Fahrt- oder Lösestellung schwenken kann. Wenn dann der Fahrer im Glauben an eine zugespannte Parkbremse das Fahrzeug verlässt, besteht die Gefahr, dass sich das Fahrzeug unkontrolliert in Bewegung setzt.

Ferner ist ein Parkbremsventil mit Signalisierung einer nicht vollständig erreichten Parkbremsstellung aus der DE 33 46 018 A1 bekannt. In dieser Druckschrift wird eine Handbremse bzw. Feststellbremseinrichtung für Fahrzeuge mit einem in einer Park- bzw. Feststellbremsstellung mittels eines Rastgliedes verrastbaren Handgriffs offenbart. Diese Feststellbremseinrichtung weist eine Überwachungseinrichtung auf, die das vollständige Einrasten des Rastgliedes überwacht. Nur bei vollständig eingerastetem Rastglied wird eine Schaltvorrichtung zum Betätigen eines optischen oder akustischen Kontrollzeichens eingeschaltet. Im Gegensatz zum o.g. Stand der Technik wird zwar auch das Zusammenwirken eines Rastgliedes mit einer Schaltkulisse beschrieben, aber die mechanischen Bauteile sind in ihrer Gesamtheit technisch erheblich aufwendiger, was die Kosten der Herstellung selbstverständlich erhöht. Andererseits wird in dieser Druckschrift ein Stößelschalter beschrieben, der, je nach Stellung der Schaltstange zur Einstellung des Feststellbremsventils, über einen Stößel betätigt wird und damit ein elektrisches Signal erzeugt. Dieses elektrische Signal wird allerdings in der Teststellung der Schaltstange wieder unterbrochen, was zu Fehlinterpretationen der Bedienperson führen kann. Insbesondere ist eine derartige Signalerzeugung bei einer elektronischen Auswertung der Signale schwierig, so dass eine Fehlinterpretation der Signale schwerwiegende Folgen haben kann

Als nachteilig an diesen im Stand der Technik bekannt gewordenen Feststellbremseinrichtungen wird es im Allgemeinen empfunden, dass die Genauigkeit und die damit verbundenen Toleranzen der mechanischen Bauteile einer derartigen Feststellbremseinrichtung verhältnismäßig anspruchsvoll sein muss, um den Sicherheitsanforderungen zu genügen. Weiterhin ist es für die Bedienperson bei normaler Konzentration in der Regel schwierig, die notwendigen Einstellungen der zusammenwirkenden Rastglieder und Hebel genau zu treffen, wodurch natürlich die Funktion der Feststellbremseinrichtung zumindest als kompliziert und nicht gesichert anzusehen ist.

Eine gattungsgemäße Parkbremseinrichtung wird in DE 33 46 018 A1 beschrieben. Dort wird ein elektrisches Signal über den Status des Parkbremsventils im Betriebsmodus "Parken" erzeugt.

### Aufgabe der Erfindung

Ausgehend vom oben genannten Stand der Technik besteht die Aufgabe der vorliegenden Erfindung darin, eine Parkbremseinrichtung der eingangs erwähnten Art derart weiter zu entwickeln, dass die Sicherheit gegenüber einer unbeabsichtigten Fehlbedienung erhöht wird.

Diese Aufgabe wird durch die Merkmale gemäß Patentanspruch 1 gelöst.

### Offenbarung der Erfindung

Ausgangspunkt der Erfindung ist eine Parkbremseinrichtung mit einem rein pneumatisch-mechanischen Parkbremsventil, bei welchem der Bedienhebel mit einem Steuerkörper zur Betätigung eines Parkbremsventilmechanismus verbunden ist. Der Parkbremsventilmechanismus kann dabei beispielsweise ein Doppelsitzventil mit Einlassventilsitz und Auslassventilsitz beinhalten.

Es ist dabei vorgesehen, dass eine mit dem Rastkörper zusammen wirkende erste Sensoreinrichtung vorgesehen ist, welche derart ausgebildet ist, dass sie abhängig von einem vollständigen oder nicht vollständigen bzw. nicht erfolgten Einrasten des Rastkörpers in die Kulissenöffnung der Schaltkulisse ein erstes elektrisches Signal für eine elektronische Auswerteeinrichtung erzeugt.

Dieses erste elektrische Signal dient dann als Indikator dafür, ob der Rastkörper in die Kulissenöffnung vollständig eingerastet ist oder nicht. Wenn der Rastkörper nicht oder nicht vollständig in die Kulissenöffnung eingerastet ist, so wird beispielsweise das erste elektrische Signal für die Auswerteeinrichtung erzeugt. Unwesentlich dabei ist der Signalpegel dieses ersten elektrischen Signals. Wesentlich ist vielmehr, dass das Vorhandensein des ersten elektrischen Signals und das Nicht-Vorhandensein des ersten elektrischen Signals zwei unterscheidbaren Signalzuständen mit unterschiedlichen Signalpegeln entspricht und die beiden Zustände - Rastkörper in die Kulissenöffnung vollständig eingerastet einerseits und Rastkörper in die Kulissenöffnung nicht oder nicht vollständig eingerastet - anhand der entsprechenden Signalpegel des ersten elektrischen Signals eindeutig voneinander unterscheidbar sind. Dies kann auch den Fall beinhalten, dass der Signalpegel des ersten elektrischen Signals bzw. dessen Betrag bei vollständig in die Kulissenführung eingerastetem Rastkörper beispielsweise größer als Null und der Signalpegel bei nicht oder nicht vollständig in die Kulissenführung eingerastetem Rastkörper beispielsweise gleich Null ist.

In jedem Fall liefert das erste elektrische Signal eine eindeutige Information über den Status des Parkbremsventils in einer Schwenkstellung des Bedienhebels, in der der Rastkörper in eine Kulissenöffnung einrasten muss und insbesondere darüber, ob die eingenommene Schwenkstellung des Bedienhebels auch tatsächlich stabil ist oder nicht. Selbstverständlich kann das gleiche Prinzip außer auf die Parkbremsstellung auch auf weitere Stellungen des Bedienhebels des Parkbremsventils übertragen werden, in welchen der Rastkörper in eine Kulissenöffnung einrasten muss.

Erfindungsgemäß ist die elektronische Auswerteeinrichtung ausgebildet, dass sie neben dem ersten elektrischen Signal ein zweites elektrisches Signal einer oder mehrerer zweiter Sensoreinrichtungen empfängt und verarbeitet bzw. auswertet, welches abhängig von einer bestehenden oder nicht bestehenden Zugriffsmöglichkeit des Fahrers des Fahrzeugs oder einer Bedienperson auf den Bedienhebel erzeugbar ist, wobei die elektronische Auswerteeinrichtung abhängig von dem ersten elektrischen Signal und dem zweiten elektrischen Signal ein optisch und/oder akustisch wahrnehmbares Warnsignal erzeugt und/oder ein automatisches Zuspannen der Parkbremse veranlasst wird.

Das mittels der ersten Sensoreinrichtung bei einem unvollständigen oder nicht erfolgten Einrasten des Rastkörpers in die Kulissenöffnung erzeugte erste elektrische Signal wird dann in der Auswerteeinrichtung zusammen mit einem zweiten elektrischen Signal oder mehreren zweiten elektrischen Signalen, die von wenigstens einer zweiten Sensoreinrichtung abhängig von einer bestehenden oder nicht bestehenden Zugriffsmöglichkeit des Fahrers des Fahrzeugs oder einer Bedienperson auf den Bedienhebel erzeugbar sind, dahin gehend ausgewertet, ob von der Auswerteeinrichtung das optisch und/oder akustisch wahrnehmbare Warnsignal oder ein Freigabesignal ausgegeben werden soll.

Alternativ zur Ausgabe des Warnsignals oder zusätzlich dazu ist die Auswerteeinrichtung ausgebildet, dass sie die Parkbremsen des Fahrzeugs bzw. die Parkbremsaktuatoren automatisch zuspannt, beispielsweise durch elektrische Ansteuerung eines oder mehrerer Magnetventile, durch welche die in der Regel von passiven Federspeicherbremszylindern vorliegenden Parkbremsaktuatoren entlüftet und damit zugespannt werden.

Wenn daher beispielsweise von der ersten Sensoreinrichtung ein erstes elektrisches Signal in die Auswerteeinrichtung eingesteuert wird, weil sich zwar der Bedienhebel des Parkbremsventils in der Schwenkstellung "Parken" befindet, aber der Rastkörper unvollständig oder nicht vollständig in die Kulissenöffnung eingerastet ist, so wird ein Warnsignal erzeugt, woraufhin ein auf dem Fahrersitz anwesender Fahrer bzw. eine Bedienperson durch eine neuerliche Betätigung des Bedienhebels unter vollständigem Einrasten des Rastkörpers eine stabile Schwenkstellung "Parken" herstellen kann.

Wenn aber der Fahrer bzw. die Bedienperson das Warnsignal ignoriert oder sich bei Ausgabe des Warnsignals nicht mehr in Fahrposition, d.h. nicht mehr auf dem Fahrersitz und/oder in Betätigungsreichweite für eine Betätigung des Bedienhebels befindet, so kann er nicht mehr eingreifen.

In diesem Fall ist es zweckdienlich, wenn ein zweites elektrisches Signal oder mehrere zweite Signale wenigstens einer zweiten Sensoreinrichtung in die Auswerteeinrichtung eingesteuert werden, welche ein Indiz dafür bilden, ob sich der Fahrer bzw. eine Bedienperson auf dem Fahrersitz und/oder in Betätigungsreichweite für eine Betätigung des Bedienhebels befindet. Falls dies nicht der Fall ist, so wird durch die Auswerteeinrichtung beispielsweise weiterhin das optisch und/oder akustisch wahrnehmbare Warnsignal ausgesteuert, welches auf die oben beschriebene Gefahrensituation einer nur instabil eingenommenen Parkbremsstellung des Bedienhebels des Parkbremsventils hinweist und/oder die Auswerteeinrichtung ein automatisches Zuspannen der Parkbremse veranlasst, beispielsweise durch elektrische Ansteuerung von Entlüftungs-Magnetventilen.

Durch die in den Unteransprüchen aufgeführten Maßnahmen sind vorteilhafte Weiterbildungen und Verbesserungen der in Anspruch 1 angegebenen Erfindung möglich.

Besonders bevorzugt umfasst die Sensoreinrichtung einen mit dem Rastkörper berührungslos zusammen wirkenden Sensor, beispielsweise wenigstens einen Hall-Sensor.

Alternativ kann die erste Sensoreinrichtung auch einen Berührungssensor beispielsweise in Form eines elektrischen Schalters umfassen, mit einem vom Rastkörper direkt oder indirekt kontaktierbaren Schaltorgan, wobei der elektrische Schalter derart angeordnet ist, dass das Schaltorgan den Schalter bei nicht oder nicht vollständig in die Kulissenöffnung eingerastetem Rastkörper nicht von einer ersten Schaltposition in eine zweite Schaltposition zu überführen vermag, aber bei vollständig in die Kulissenöffnung eingerastetem Rastkörper ihn von der ersten Schaltposition in die zweite Schaltposition überführt. Je nach Schaltposition des Schalters wird daher das erste elektrische Signal erzeugt oder nicht.

Gemäß einer ersten Ausführungsform ist die elektronische Auswerteeinrichtung ausgebildet, dass sie im Falle einer unterbliebenen Erzeugung und/oder einer unterbliebenen Einsteuerung des ersten elektrischen Signals ein optisch und/oder akustisch wahrnehmbares, eine stabil eingenommene Schwenkstellung des Bedienhebels symbolisierendes Freigabesignal erzeugt, weil dann der Rastkörper vollständig in die Kulissenöffnung eingerastet ist. Dieses Freigabesignal kann beispielsweise in einem Aufleuchten einer grünen Lampe bestehen, was dem Fahrer signalisiert, dass der Rastkörper vollständig in die Kulissenöffnung eingerastet ist und deshalb die beispielsweise der Stellung "Parken" entsprechende Schwenkposition des Bedienhebels stabil eingenommen wurde.

Gemäß einer Weiterbildung dieser ersten Ausführungsform kann die elektronische Auswerteeinrichtung ausgebildet sein, dass sie im Falle einer vollzogenen Erzeugung und/oder vollzogenen Einsteuerung des ersten elektrischen Signals ein optisch und/oder akustisch wahrnehmbares Warnsignal erzeugt. Dieses Warnsignal deutet dann auf eine generell instabile Position des Bedienhebels hin, dann aber auch in von der Stellung "Parken" abweichenden Schwenkstellungen des Bedienhebels. Wesentlich ist jedoch, dass der Fahrer nach dem Stellen des Bedienhebels beispielsweise in die Schwenkposition "Parken" ein Warnsignal erhält, wenn der Bedienhebel keine stabile Parkstellung eingenommen hat.

Wenn daher beispielsweise von der Sensoreinrichtung ein erstes elektrisches Signal in die Auswerteeinrichtung eingesteuert wird, weil sich zwar der Bedienhebel bzw. die Schaltstange des Parkbremsventils in der Schwenkstellung "Parken" befindet, aber der Rastkörper unvollständig oder nicht vollständig in die Kulissenöffnung eingerastet ist, so wird der Fahrer oder eine Bedienperson auf diesen Umstand durch das Warnsignal hingewiesen und kann entsprechend eingreifen, indem der Bedienhebel des Parkbremsventils so betätigt wird, dass der Rastkörper in die Kulissenöffnung vollständig einrastet.

Als Indiz dafür, ob sich eine Bedienperson auf dem Fahrersitz und/oder in Betätigungsreichweite für eine Betätigung des Bedienhebels befindet, kann das zweite elektrische Signal insbesondere in Abhängigkeit einer oder mehrerer der folgenden Situationen erzeugt werden:
- Anwesenheit bzw. Abwesenheit des Fahrers auf dem Fahrersitz oder in einer Fahrerkabine des Fahrzeugs, festgestellt beispielsweise durch ein Signal eines Sitzsensors als zweite Sensoreinrichtung, wobei eine Detektion eines nicht auf dem Fahrersitz anwesenden Fahrers auf eine nicht vorhandene Eingriffsmöglichkeit durch den Fahrer oder eine Bedienperson hindeutet,
- Anlegezustand (Sicherheitsgurt angelegt oder nicht angelegt) eines dem Fahrersitz zugeordneten Sicherheitsgurts, festgestellt beispielsweise durch ein Signal eines Gurtschlosssensors als zweite Sensoreinrichtung, wobei eine Detektion eines nicht angelegten Sicherheitsgurtes auf eine nicht vorhandene Eingriffsmöglichkeit durch den Fahrer oder eine Bedienperson hindeutet,
- Betriebszustand der Zündung des Kraftfahrzeugs (Zündung "an" oder "aus"), festgestellt beispielsweise durch ein Signal eines Zündschlosssensors als zweite Sensoreinrichtung, wobei eine Detektion einer ausgeschalteten Zündung des Fahrzeugs auf eine nicht vorhandene Eingriffsmöglichkeit durch den Fahrer oder eine Bedienperson hindeutet,
- Kippzustand eines kippbaren Fahrerhauses des Fahrzeugs, falls es sich um ein schweres Nutzfahrzeug mit kippbarem Fahrerhaus handelt, festgestellt beispielsweise durch ein Signal eines Sensors eines Verriegelungsschlosses des Kippmechanismus des Fahrerhauses als zweite Sensoreinrichtung, wobei eine Detektion eines gekippten Fahrerhauses auf eine nicht vorhandene Eingriffsmöglichkeit durch den Fahrer oder eine Bedienperson hindeutet,
- Schaltzustand eines Getriebes des Fahrzeugs, festgestellt beispielsweise durch ein Signal eines Getriebesensors als zweite Sensoreinrichtung, wobei eine Detektion eines einem Stillstand oder Parkzustand des Fahrzeugs entsprechenden Gangwahl des Getriebes auf eine nicht vorhandene Eingriffsmöglichkeit durch den Fahrer oder eine Bedienperson hindeutet,
- Druck in einem Parkbremsaktuator der Parkbremseinrichtung wie einem passiven pneumatischen Federspeicherbremszylinder, festgestellt beispielsweise durch ein Signal eines Drucksensors als zweite Sensoreinrichtung, wobei eine Detektion eines niedrigen und unterhalb eines Lösedrucks liegenden Drucks im Federspeicherbremszylinder auf einen zugespannten Federspeicherbremszylinder, folglich auf einen Parkzustand des Fahrzeugs und damit eine nicht vorhandene Eingriffsmöglichkeit durch den Fahrer oder eine Bedienperson hindeutet.

Diese Auflistung ist nicht abschließend, mithin sind weitere Indizien denkbar, welche auf eine nicht vorhandene Eingriffsmöglichkeit durch den Fahrer oder eine Bedienperson auf den Bedienhebel des Parkbremsventils hindeuten. Hierzu werden in vorteilhafter Weise die Signale bereits im Fahrzeug ohnehin vorhandener, oben beschriebener zweiter Sensoreinrichtungen als zweite elektrische Signale für die Auswerteeinrichtung genutzt.

Technisch kann die zweite Ausführungsform beispielsweise dadurch realisiert werden, indem das erste elektrische Signal, welches auf einen in die Kulissenöffnung nicht oder unvollständig eingerasteten Rastkörper hinweist, und das zweite elektrische Signal, welches auf eine nicht vorhandene Eingriffsmöglichkeit durch den Fahrer oder eine Bedienperson auf den Bedienhebel des Parkbremsventils hindeutet, in der die Auswerteeinrichtung in einem UND-Gatter kumuliert vorliegen müssen, um die Auswerteeinrichtung zu veranlassen, das Warnsignal zu erzeugen und/oder die Parkbremse automatisch zuzuspannen.

Selbstverständlich kann auch bei dieser zweiten Ausführungsform ein Freigabesignal durch die Auswerteeinrichtung erzeugt werden, falls kein erstes elektrisches Signal von der ersten Sensoreinrichtung in die Auswerteeinrichtung eingesteuert wird, um auf eine stabil eingenommene Schwenkstellung des Bedienhebels des Parkbremsventils hinzuweisen.

Für den Fall, dass die erste Sensoreinrichtung einen Berührungssensor beispielsweise in Form eines elektrischen Schalters umfasst, ist gemäß einer dritten Ausführungsform ein Federelement als Wirkverbindung zwischen dem Schaltorgan der ersten Sensoreinrichtung und dem Rastkörper vorgesehen, das derart ausgeführt und angeordnet ist, dass bei vollständig in die Kulissenöffnung eingerastetem Rastkörper der Rastkörper eine Kraft auf das wenigstens eine Federelement ausübt, welches die Kraft auf das Schaltorgan des Schalters direkt oder indirekt überträgt, um ihn von der ersten Schaltposition in die zweite Schaltposition zu überführen.

Diese Maßnahme hat den großen Vorteil, dass keine hohen Anforderungen an die Einbaugenauigkeit der ersten Sensoreinrichtung gestellt werden müssen, welche beispielsweise in einem Mikroschalter besteht, dessen Schaltorgan aus einem relativ kleinen Taster mit ebenso kleinem Betätigungsweg besteht. Andernfalls wären an die Kinematik zwischen Rastelement und Schaltorgan hohe Toleranzanforderungen zu stellen.

Dabei kann wenigstens eine Federelement an wenigstens einem am Ventilgehäuse schwenkbar gelagerten Kipphebel eines Kipphebelmechanismus abgestützt sein, der zumindest in der Betriebsstellung "Parken" des Bedienhebels einerseits mit dem Rastelement und andererseits mit dem Schaltorgan des Schalters in Kontakt bringbar ist.

Gemäß einer Weiterbildung beinhaltet das wenigstens eine Federelement eine komprimierbare Druckfeder, welche zwischen zwei Kipphebeln des Kipphebelmechanismus gelagert ist, einem ersten um eine Schwenkachse schwenkbaren Kipphebel und einem zweiten um eine Schwenkachse schwenkbaren Kipphebel, wobei das Rastelement beim Einrasten in die Kulissenöffnung mit dem ersten Kipphebel in Kontakt gerät, welcher unter Schwenkbewegung um seine Schwenkachse eine Druckkraft auf das wenigstens eine Federelement ausübt, das unter Kompression die Druckkraft auf den zweiten Kipphebel überträgt, der unter Schwenkbewegung um seine Schwenkachse das Schaltorgan des Schalters kontaktiert, um ihn von der ersten Schaltposition in die zweite Schaltposition zu überführen.

Besonders bevorzugt weisen der erste und der zweite Kipphebel eine gemeinsame Schwenkachse auf, was den Aufbau vereinfacht.

Weiterhin kann ein einerseits am Ventilgehäuse und andererseits am ersten Kipphebel angekoppeltes weiteres Federelement den ersten Kipphebel einerseits in Kontakt mit dem Rastkörper und andererseits in Kontakt mit dem zweiten Kipphebel vorspannen.

Bevorzugt sind auch an dem ersten Kipphebel zwei Zapfen angeordnet sind, von denen ein erster Zapfen einerseits eine Abstützfläche für das wenigstens eine Federelement und andererseits eine Kontaktfläche für den zweiten Kipphebel und ein zweiter Zapfen eine Kontaktfläche für den Rastkörper aufweist.

Gemäß einer Weiterbildung weist der zweite Kipphebel eine rahmenförmige Ausnehmung auf, in welche der erste Zapfen des ersten Kipphebels hineinragt, wobei das wenigstens eine Federelement zwischen dem ersten Zapfen und einer Stützfläche in der rahmenförmigen Ausnehmung aufgenommen ist.

Besonders bevorzugt ist eine Anschlageinrichtung vorgesehen, welche eine Schwenkbewegung des zweiten Kipphebels über eine definierte, ein eindeutiges Umschalten des Schalters bewirkende Schwenkstellung hinaus verhindert. Diese definierte Schwenkstellung des zweiten Kippehebels liegt insbesondere im Betriebszustand "Parken" vor. Hierzu kann beispielsweise der zweite Kipphebel einen Vorsprung aufweisen, der im Betriebszustand "Parken" und dann bei in die Kulissenöffnung eingerastetem Rastkörper einen Begrenzungsanschlag am Ventilgehäuse kontaktiert.

Gemäß einer besonders zu bevorzugenden Weiterbildung ist in Bewegungsrichtung des Rastkörpers entlang der Kulisse gesehen die Dimension des zweiten Zapfens derart bemessen, dass der Rastkörper sowohl in der den Betriebszustand "Parken" repräsentierenden Schwenkposition des Bedienhebels als auch in einer einen Betriebszustand "Teststellung" repräsentierenden Schwenkposition des Bedienhebels den zweiten Zapfen kontaktiert, wobei ausgehend von der den Betriebszustand "Parken" repräsentierenden Schwenkposition der Rastkörper zunächst über die Raststellung in der Kulissenöffnung hinaus nach radial innen unterhalb des Niveaus der Schaltkulisse unter weiterer Kompression des wenigstens einen Federelements gebracht wird und dann durch nachfolgendes Verschwenken des Bedienhebels in die den Betriebszustand "Teststellung" repräsentierende Schwenkposition unterhalb der Schaltkulisse entlang gleitet.

In dem Betriebszustand "Teststellung", also bei zugespannter Feststellbremse des Zugfahrzeugs, gestattet das Parkbremsventil eine Kontrolle der alleinigen Bremswirkung der Federspeicherbremsanlage des Zugfahrzeuges, indem die Bremse im Anhänger zu diesem Zweck gelöst wird.

Dann verbleibt der Rastkörper beim Verschwenken des Bedienhebels vom Betriebszustand "Parken" in den Betriebszustand "Teststellung" in Eingriff mit dem ersten Kipphebel bzw. mit dessen zweitem Zapfen und kann beispielsweise entlang der Kontaktfläche des zweiten Zapfens gleiten, wobei dabei nach wie vor der zweite Kipphebel das Schaltorgan des Schalters kontaktiert, um ihn der zweiten Schaltposition zu halten. Dadurch wird einerseits weiterhin die zuspannte Parkbremse des Zugfahrzeugs signalisiert. Andererseits ist der Übergang von "Parken" in "Teststellung" mechanisch stetig, weil der Rastkörper trotz Verschwenken des Bedienhebels in Kontakt mit dem ersten Kipphebel bleibt.

Die Erfindung betrifft auch ein Fahrzeug, welches eine oben beschriebene Parkbremseinrichtung beinhaltet.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnungen

Nachstehend sind Ausführungsbeispiele der Erfindung in den Zeichnungen dargestellt und in der nachfolgenden Beschreibung näher erläutert. In den Zeichnungen zeigt
- Fig.1: eine Querschnittsdarstellung eines Parkbremsventils einer Parkbremseinrichtung gemäß der Erfindung mit einem Bedienhebel in einer Schwenkstellung "Hilfsbremsen";
- Fig.2: eine perspektivische, teilweise aufgeschnittene Darstellung eines Parkbremsventils gemäß einer ersten Ausführungsform mit dem Bedienhebel in einer Schwenkstellung "Fahrt";
- Fig.3: eine Querschnittsdarstellung des Parkbremsventils von Fig.2 mit dem Bedienhebel in einer Schwenkstellung "Parken", wobei ein Rastkörper nicht vollständig in eine Kulissenöffnung eingerastet ist;
- Fig.4: eine Querschnittsdarstellung des Parkbremsventils von Fig.2 mit dem Bedienhebel in der Schwenkstellung "Parken", wobei der Rastkörper vollständig in die Kulissenöffnung eingerastet ist;
- Fig.5: ein schematisches Blockschaltbild mit einem Schaltschema einer Parkbremseinrichtung gemäß der ersten Ausführungsform;
- Fig.6: ein schematisches Blockschaltbild mit einem Schaltschema einer Parkbremseinrichtung gemäß einer zweiten Ausführungsform;
- Fig.7: eine perspektivische Darstellung eines Parkbremsventils einer Parkbremseinrichtung gemäß einer dritten Ausführungsform;
- Fig.8: eine Seitenansicht des Parkbremsventils von Fig.7, mit dem Bedienhebel in Schwenkstellung "Fahrt";
- Fig.9: eine Seitenansicht des Parkbremsventils von Fig.7, mit dem Bedienhebel in Schwenkstellung"Parken";
- Fig.10: eine Seitenansicht des Parkbremsventils von Fig.7, mit dem Bedienhebel in Schwenkstellung "Teststellung",
- Fig.11: eine Draufsicht auf das Parkbremsventil, mit dem Bedienhebel in Schwenkstellung "Parken".

### Beschreibung der Ausführungsbeispiele

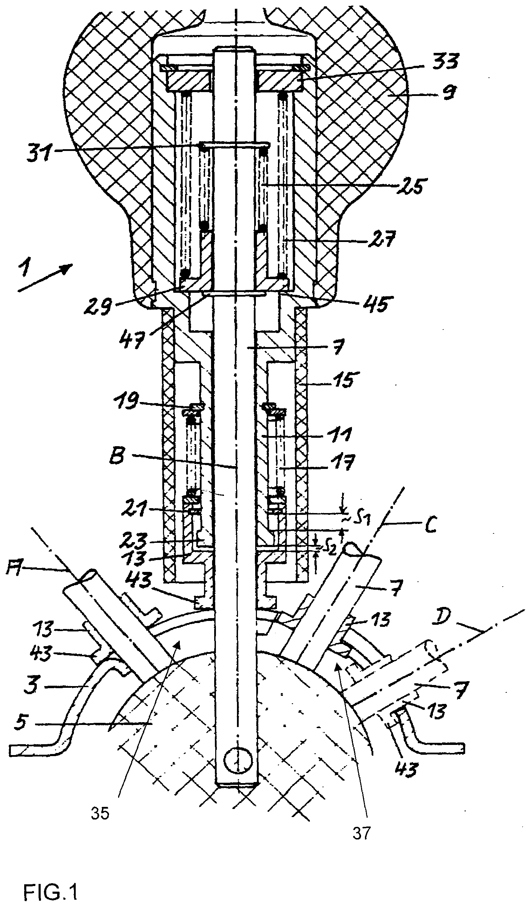

Fig.1 ist eine Querschnittsdarstellung eines Parkbremsventils einer pneumatisch-mechanischen Parkbremseinrichtung eines Nutzfahrzeugs als Teil einer pneumatischen oder elektro-pneumatischen Bremseinrichtung des Nutzfahrzeugs. Mit dem Parkbremsventil wird in bekannter Weise wenigstens ein Parkbremsaktuator des Nutzfahrzeugs, vorzugsweise in Form eines pneumatischen Federspeicherbremszylinders zum Zuspannen (Parkstellung) entlüftet und zum Lösen (Fahrstellung) belüftet. Falls das Nutzfahrzeug ein Zugfahrzeug einer Zugfahrzeug-Anhängerkombination ist, dann dient das Parkbremsventil gleichzeitig zum Betätigen der (Betriebs-) Bremse des Anhängers über ein ebenfalls bekanntes Anhängersteuerventil. Falls zusätzlich, wie hier eine Hilfsbremsfunktion vorgesehen ist, kann mit dem Parkbremsventil auch eine Hilfsbremsung von Zugfahrzeug und gegebenenfalls Anhänger in bekannter Weise ausgelöst werden. Nicht zuletzt kann das Parkbremsventil auch eine Stellung "Test" einnehmen, in welcher getestet wird, ob das über die Federspeicherzylinder eingebremste Zugfahrzeug mit angekoppeltem ungebremsten Anhänger die Zugfahrzeug-Anhängerkombination eingebremst halten kann.

Das Parkbremsventil nach Fig.1 weist einen Bedienhebel 1 im Zusammenwirken mit einer Schaltkulisse 3 auf. Der Bedienhebel 1 wirkt über einen an dem im (nicht dargestellten) Gehäusekopf des Parkbremsventils befindlichen Ende angebrachten Steuerkörper 5 auf einen (nicht dargestellten) Ventilmechanismus ein, welcher zur Steuerung der Hilfs- und Feststellbremsanlage in Nutzfahrzeugen bevorzugt mit Anhängeranschluss dient.

Der Bedienhebel 1 ist mit einer Schaltstange 7 versehen, welche an ihrem gemäß Darstellung nach Fig.1 oberen Ende von einem Schaltgriff 9 umgeben ist. Der Schaltgriff 9 ist mit einer Schalthülse 11 verbunden, die sich gemäß Darstellung in einen Rastkörper 13 erstreckt. Der Schaltgriff 9 ist auf die Schalthülse 11 unverlierbar aufgeschoben; es ist auch möglich, dass der Schaltgriff 9 in anderer Weise mit der Schalthülse 11 verbunden ist, so kann der Schaltgriff auch materialeinheitlich mit der Schalthülse gefertigt sein. Eine Schutzhülse 15, welche ihrerseits auf die Schalthülse 11 aufgeschoben und unverschiebbar zu dieser gehalten ist, umgibt den gemäß Darstellung nach Fig. 1 unteren Bereich der Schaltstange. Die Schutzhülse 15 umfasst vorzugsweise den Rastkörper 13, welcher sich mittels einer Rastierfeder 17 an einem mit der Schalthülse verbundenen Sicherungsring 19 abstützt. Auf diese Weise vermag die Rastierfeder 17 den Rastkörper 13 in nachfolgend beschriebener Weise nach unten gerichtet zu drücken, d.h. in Richtung des Steuerkörpers 5.

Am Rastkörper 13 ist innenseitig ein Anschlagring 21 fixiert, welcher sich bei nach unten gerichteter Bewegung des Rastkörpers an einer Schulter 23 der Schalthülse 11 anzulegen vermag.

Im gemäß Darstellung nach Fig.1 oberen Bereich des Bedienhebels 1 sind innerhalb des Schaltgriffes 9 zwei Federn vorgesehen, eine innere Hebefeder 25 und eine äußere Feder 27. Die beiden Federn stützen sich an ihrem gemäß Darstellung unteren Ende an einer verschiebbar an der Schaltstange 7 gehaltenen Anschlaghülse 29 ab. Das obere Ende der Hebefeder 25 ist an einem mit der Schaltstange 7 verbundenen Anschlagring 31 abgestützt, während das obere Ende der Feder 27 an einer innenseitig von der Schalthülse 11 auskragenden Schulter 33 abgestützt ist.

Der Rastkörper 13 wirkt, wie vorstehend ausgeführt wurde, mit der Schaltkulisse 3 zusammen, um die Schaltpositionen des Parkbremsventils festzulegen. Die ihrem Aufbau nach an sich bekannte Schaltkulisse 3, welche als einfaches Stanzteil gefertigt sein kann, besitzt einen sogenannten Kulissenschlitz 35, der sich vom unteren Ende des Schlitzes bis in eine erweiterte Kulissenöffnung 37 erstreckt. Zu beiden Seiten des zur Führung des Bedienhebels 1 dienenden Kulissenschlitzes 35 befinden sich Führungsbahnen, auf welchem der in Fig.1 dargestellte Rastkörper 13 zwischen den nachfolgend beschriebenen Positionen A und B entlang gleitet, d.h. also, solange sich die Schaltstange 7 innerhalb des Führungsbereiches des Kulissenschlitzes 35 befindet. Am gemäß der Darstellung oberen Ende des Kulissenschlitzes 35, d.h. kurz vor dem Übergang in die Kulissenöffnung 37, können beidseitig Druckpunktanschläge (nicht dargestellt) vorgesehen sein. Diese stellen sicher, dass der Rastkörper 13 einen spürbaren Widerstand vermittelnd, gegen die Druckpunktanschläge aufläuft, bevor er in nachfolgend beschriebener Weise in die Kulissenöffnung 37 einzutauchen vermag. Durch das Anschlagen und Aufgleiten des Rastkörpers 13 an den Druckpunktanschlägen wird demnach ein bestimmter Widerstand hervorgerufen, welcher für den Schaltgriff 9 betätigenden Fahrer des Fahrzeugs spürbar wird und ihm als Indiz für die Position des Schaltgriffes 9 dient. Derartige Druckpunktanschläge sind jedoch für die Funktion der Schaltkulisse 3 nicht unbedingt erforderlich, insbesondere dann, wenn ein kleiner, empfindlicher Einrastbereich infolge kleiner Übergangsradien an Schaltkulisse 3 und Rastkörper 13 besteht.

### Position A: Lösestellung

Wenn sich der Bedienhebel 1 in der in Fig. 1 schematisch dargestellten Position A, d.h. in der Löse- oder Fahrstellung befindet, dann liegt er unter der Vorspannung von am Steuerkörper 5 angreifenden (nicht dargestellten) Rückholfedern, welche gem. Fig.1 gegen den Uhrzeigersinn gerichtet wirken, in Anschlagposition am Ende des Kulissenschlitzes 35 an. In dieser Lage des Bedienhebels 1 befindet sich der (nicht dargestellte) Ventilmechanismus des Parkbremsventils in einer Position, in welcher sowohl die zur Federspeicherbremsanlage als auch zum Anhängersteuerventil führenden Leitungen belüftet sind Wird der Bedienhebel 1 ausgehend von der Position A entgegen der Wirkung der (nicht dargestellten) Rückholfedern im Uhrzeigersinn gerichtet bewegt, so wird nach dem Durchlaufen eines bestimmten Betätigungswinkels mit dem gestuften Abbremsen begonnen, das heißt, die Federspeicherbremszylinder und die indirekte Steuerkammer des Anhängersteuerventils werden entsprechend der Winkellage des Bedienhebels 1 entlüftet. So baut sich z.B. innerhalb eines Betätigungsbereiches von 10 bis 55 Winkelgrad der Druck in den Federspeicherbremszylindern und in der indirekten Steuerkammer des Anhängersteuerventils proportional zum Betätigungsweg des Bedienhebels 1 ab.

### Position B: Hilfsbremsstellung

Zwischen den Positionen A und B wird in vorstehend beschriebener Weise ein abgestuftes Bremsen durchgeführt. Erreicht der Bedienhebel 1 bei Verdrehen gegen die Kraft der (nicht dargestellten) Rückholfedern die Position B, dann ist das Ende der Hilfsbremsstellung erreicht, welche im wesentlichen der Vollbremsstellung des Parkbremsventils entspricht. Bei Vorhandensein von Druckpunktanschlägen beginnt der Rastkörper 13 an diesen anzuschlagen bzw. aufzulaufen, mit der Folge, dass der den Bedienhebel 1 betätigende Fahrer des Fahrzeugs einen gewissen Widerstand spürt. Dieser Widerstand teilt sich dem Fahrer mit, da der Rastkörper 13 bei Auflaufen auf die Druckpunktanschläge gegenüber erhöhtem Widerstand verschoben werden muss. Die dem Rastkörper 13 hierbei nach oben gerichtet erteilte Relativverschiebung zur Schalthülse 11 ist möglich, da zwischen dem unteren Ende der Schulter 23 und der zugewandten Anschlagfläche des Rastkörpers ein gewisses Spiel besteht (Fig. 1).

### Position C: Parkbremsstellung

Wenn der Bedienhebel 1 die Position C erreicht hat, dann ist der Rastkörper 13 gegenüber der Kulissenöffnung 37 (Fig. 1) frei, das heißt, dass die zwischen den Positionen A und B vorgespannte Rastierfeder 17 den Rastkörper 13 nach unten gerichtet verschiebt, derart, dass der Rastkörper 13 in die Kulissenöffnung 37 eintaucht und sich somit in der Parkbremsstellung befindet. Für das Eintauchen des Rastkörpers 13 durch die Kraft der Rastierfeder 17 steht der in Fig.1 dargestellte Weg S1, der sog. Einrastweg, zur Verfügung. Ist der am unteren Ende des Rastkörpers 13 ausgebildete Rastbund 43 unterhalb des Niveaus der Führungsbahnen der Schaltkulisse 3, dann ist ein selbsttätiges Rückführen des Bedienhebels 1 unter der Einwirkung der (nicht dargestellten) Rückholfeder nicht mehr möglich, da der Rastkörper 13 mit seinem Rastbund 43 an der inneren Stirnfläche der Kulissenöffnung 37 anschlägt und demnach der Bedienhebel 1 an einem Weiterdrehen gesperrt ist. In dieser Parkbremsstellung, der Position C, sind die Federspeicherbremszylinder des Fahrzeugs entlüftet; gleichzeitig ist der Anhänger gebremst.

### Position D: Teststellung

In der Parkbremsstellung gemäß Position C, also bei eingelegter Feststellbremse, gestattet das Parkbremsventil eine Kontrolle der alleinigen Bremswirkung der Federspeicherbremsanlage des Fahrzeuges, indem die Bremse im Anhänger zu diesem Zweck gelöst wird. Hierbei übt der Fahrer des Fahrzeuges in der Parkbremsstellung auf den Schaltgriff 9 einen gemäß Fig.1 nach innen gerichteten Druck aus. Wenn der Schaltgriff 9 in der Parkbremsstellung des Bedienhebels 1 (Position C) nach innen gerichtet gedrückt wird, dann legt sich die Schulter 23 der Schalthülse 11 nach Durchlaufen des Spiels S2 an der zugewandten Anschlagfläche des Rastkörpers 13 an, so dass nachfolgend die Schalthülse 11 mit dem Rastkörper 13 nach innen gerichtet verschiebbar ist. Der Rastkörper 13 taucht so weit nach innen gerichtet ein, dass er nunmehr durch nachfolgendes Verschwenken des Bedienhebels 1 unterhalb des Niveaus der Schaltkulisse 3 entlang gleiten kann und auf diese Weise in die Position D verschwenkbar ist. Die Position D ist die sog. Teststellung, in welcher mit Hilfe eines (nicht dargestellten) Ventilmechanismus eine Belüftung der zum Anhängersteuerventil führenden Leitung vollzogen wird. Dadurch wird die Bremse im Anhänger gelöst, so dass sich die Bremswirkung des Zugfahrzeuges allein kontrollieren lässt. Auch diese Verschwenkung in die Position D geschieht wie bei den zuvor beschriebenen Schwenkbewegungen entgegen der Kraft der (nicht dargestellten) Rückholfedern, welche bestrebt sind, den Bedienhebel 1 in die Löse- oder Fahrtstellung A zurückzuführen. Solange die Kontrolle der alleinigen Bremswirkung der Federspeicherbremsanlage des Zugfahrzeuges in der Position D durchgeführt wird, muss also der Bedienhebel 1 festgehalten werden. Beim Loslassen bewegt er sich automatisch in die Parkbremsstellung zurück. Durch das Niederdrücken des Schaltgriffes 9 und der mit ihm verbundenen Schalthülse 11 wurde die Feder 27 gespannt, dass sich bei diesem Niederdrücken der Abstand zwischen der Schulter 33 der Schalthülse und der Anschlaghülse 29 verkürzt. Gleitet nun der Rastkörper 13 in die Position C zurück, dann nimmt er innerhalb der Kulissenöffnung 37 automatisch wieder die in Fig. 1 dargestellte Höhenlage ein, da die ihn tragende Schalthülse 11 im Bereich der Kulissenöffnung 37 frei ist, unter der Wirkung der Feder 27 radial nach außen gerichtet verschoben zu werden. Innerhalb der Kulissenöffnung 37 nimmt der Rastkörper 13 demnach die in Fig. 1 dargestellte neutrale Zwischenposition ein, in welcher er gehindert ist, unter der Einwirkung der (nicht dargestellten) Rückholfedern in die Position A verschwenkt zu werden, da er am Innenumfang der Kulissenöffnung 37 anliegt. Der Bedienhebel 1 kann folglich erst dann in die Position A zurückverschwenkt werden, wenn der Rastkörper 13 die unter Bezugnahme auf die Position B wiedergegebene, relative Höhenlage zur Schaltkulisse 3 besitzt, Es ist also erforderlich, dass der Rastkörper auf die Oberseite der Führungsbahnen 39 und 41 gelangt.

Das vorstehend genannte Lösen der Federspeicherbremsanlage aus der Parkbremsstellung, also das Rückführen des Bedienhebels 1 aus der Position C über die Position B in die Position A geschieht dadurch, dass der Fahrer des Fahrzeuges am Schaltgriff 9 radial nach außen gerichtet zieht. Hierbei wird der Schaltgriff 9 relativ zu der mit dem Steuerkörper 5 verbundenen Schaltstange 7 nach außen gerichtet bewegt. Da die Anschlaghülse 29 während dieser nach außen gerichteten Bewegung von der Anschlagschulter 45 mitgenommen wird, erfolgt eine Verspannung der Hebefeder 25 infolge der Verkürzung des Abstandes zwischen dem Anschlagring 31 und der Anschlaghülse 29. Im Schwenkbereich zwischen den Positionen A und B drückt die Hebefeder 25 infolge der vorstehend erläuterten Verspannung die Anschlaghülse 29 bis zum Anschlag an den Anschlagring 47. Gleichzeitig wird hierdurch die axiale Position der Schalthülse 11 festgelegt. Der Rastkörper 13, welcher zwischen den Positionen A und B unter der Verspannung der Rastierfeder 17 auf der Oberseite der Schaltkulisse 3 entlang gleitet, besitzt folglich den in Fig.1 wiedergegebenen Abstand entsprechend dem Einrastweg S1 bezüglich des unteren Endes der Schalthülse 11, das heißt bezüglich der Schulter 23. Der Rastkörper 13 weist demnach wiederum denjenigen Freiheitsgrad der Bewegung auf, welchen er benötigt, um im Bereich der Kulissenöffnung 37 relativ zur Schalthülse 11 nach unten gerichtet bewegt zu werden, das heißt in die in Fig. 1 dargestellte Höhenlage. Ein solches Parkbremsventil entspricht dem Stand der Technik beispielsweise gemäß der eingangs erwähnten DE 34 31 559 A1.

Bei einem solchen oder ähnlich aufgebauten Parkbremsventil ist eine mit dem Rastkörper 13 zusammen wirkende erste Sensoreinrichtung 63 vorgesehen, welche derart ausgebildet ist, dass sie abhängig von einem vollständigen oder nicht vollständigen bzw. nicht erfolgten Einrasten des Rastkörpers 13 in die Kulissenöffnung 37 der Schaltkulisse 3 ein erstes elektrisches Signal für eine elektronische Auswerteeinrichtung 65 erzeugt.

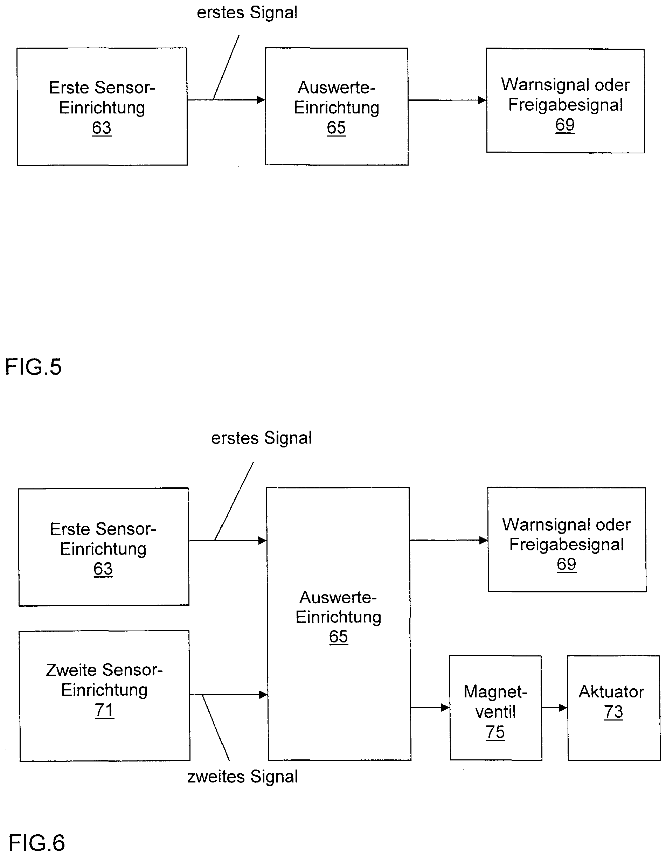

Dieses erste elektrische Signal dient dann als Indikator dafür, ob der Rastkörper 13 in die Kulissenöffnung 37 vollständig eingerastet ist oder nicht. Wenn der Rastkörper 13 nicht oder nicht vollständig in die Kulissenöffnung 37 eingerastet ist, so wird beispielsweise das erste elektrische Signal für die in Fig.5 gezeigte Auswerteeinrichtung 65 erzeugt. Dabei ist das erste elektrische Signal eine eindeutige Information über den Status des Parkbremsventils hier in der Schwenkstellung "Parken" des Bedienhebels 1, in welcher der Rastkörper 13 in die Kulissenöffnung 37 einrasten muss und darüber, ob die eingenommene Schwenkstellung "Parken" des Bedienhebels 1 auch tatsächlich stabil ist oder nicht.

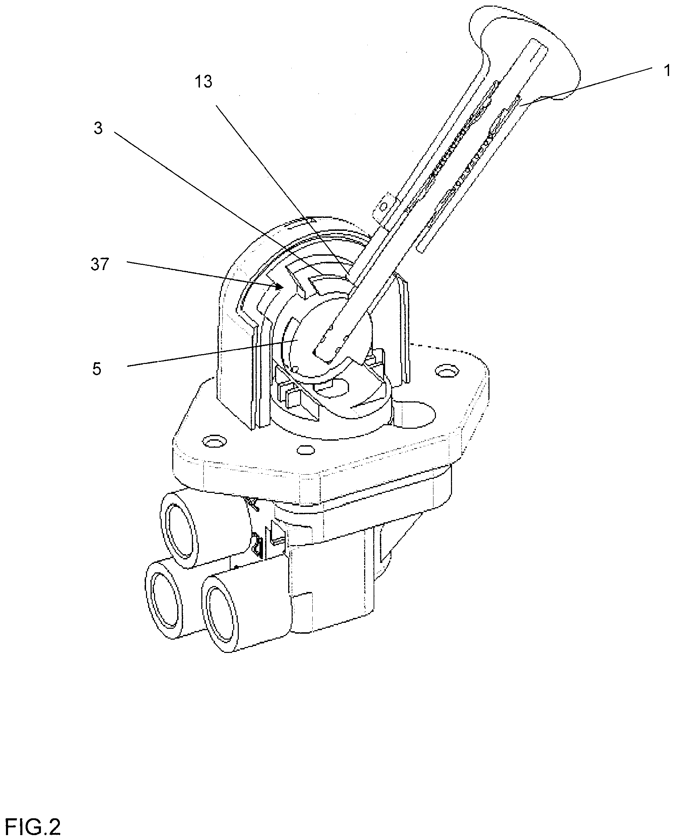

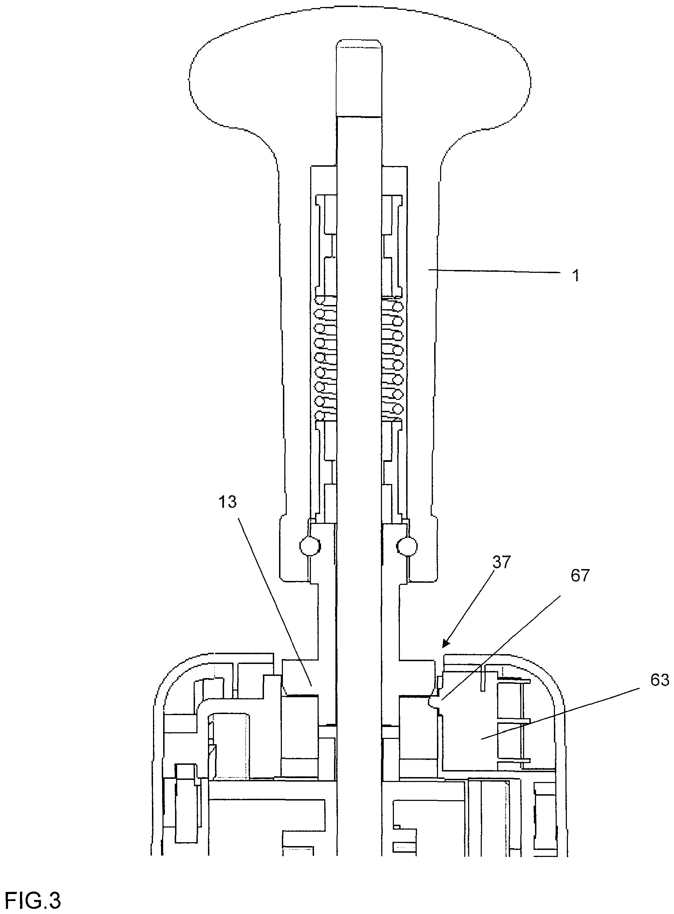

Die erste Sensoreinrichtung 63 umfasst bevorzugt einen Berührungssensor beispielsweise in Form eines elektrischen Schalters wie in Fig.2 und Fig.3 gezeigt, mit einem den Rastkörper 13 kontaktierbaren Schaltorgan 67. Dabei ist der elektrische Schalter 63 derart angeordnet, dass das Schaltorgan, hier beispielsweise ein Schaltzapfen 67, den Schalter 63 bei nicht oder nicht vollständig in die Kulissenöffnung 37 eingerastetem Rastkörper 13 nicht von einer ersten Schaltposition in eine zweite Schaltposition zu überführen vermag, aber bei vollständig in die Kulissenöffnung 37 eingerastetem Rastkörper 13 ihn von der ersten Schaltposition in die zweite Schaltposition überführt. Je nach Schaltposition des Schalters 63 wird daher das erste elektrische Signal erzeugt oder nicht. Der Schalter 63 ist beispielsweise in einen hier nicht gezeigten elektrischen Kreis geschaltet und trennt bzw. verbindet diesen elektrischen Kreis je nach Schaltzustand.

In Fig. 3 ist die Situation gezeigt, in der Rastkörper 13 bei in die Stellung "Parken" geschwenktem Bedienhebel 1 nicht vollständig in die Kulissenöffnung 37 eingerastet ist und deshalb der Rastkörper 13 den Schaltzapfen 67 zwar beinahe kontaktiert, aber die Eindringtiefe des Rastkörpers 13 in die Kulissenöffnung 37 nicht groß genug ist, um den Schalter 63 umzuschalten. In diesem Fall wird das erste elektrische Signal hier beispielsweise durch das Nicht-Trennen des elektrischen Kreises hergestellt.

Das erste elektrische Signal wird gemäß Fig.5 in die elektronische Auswerteeinrichtung 65 eingesteuert, welche einen Mikrocomputer beinhaltend daraufhin ein optisch und/oder akustisch wahrnehmbares Warnsignal 69 erzeugt. Dieses Warnsignal 69 deutet dann auf eine instabile Position des Bedienhebels 1 in der Stellung "Parken" hin und besteht insbesondere im Aufleuchten einer roten Warnleuchte.

Wenn daher von der ersten Sensoreinrichtung hier in Form des Schalters 63 ein erstes elektrisches Signal in die Auswerteeinrichtung 65 eingesteuert wird, weil sich zwar der Bedienhebel 1 des Parkbremsventils in der Schwenkstellung "Parken" befindet, aber der Rastkörper 13 nicht oder nicht vollständig in die Kulissenöffnung 37 eingerastet ist, so wird der Fahrer oder eine Bedienperson auf diesen Umstand durch das Warnsignal 69 hingewiesen und kann entsprechend eingreifen, indem der Bedienhebel 1 des Parkbremsventils so betätigt wird, dass der Rastkörper 13 in die Kulissenöffnung 37 vollständig einrastet.

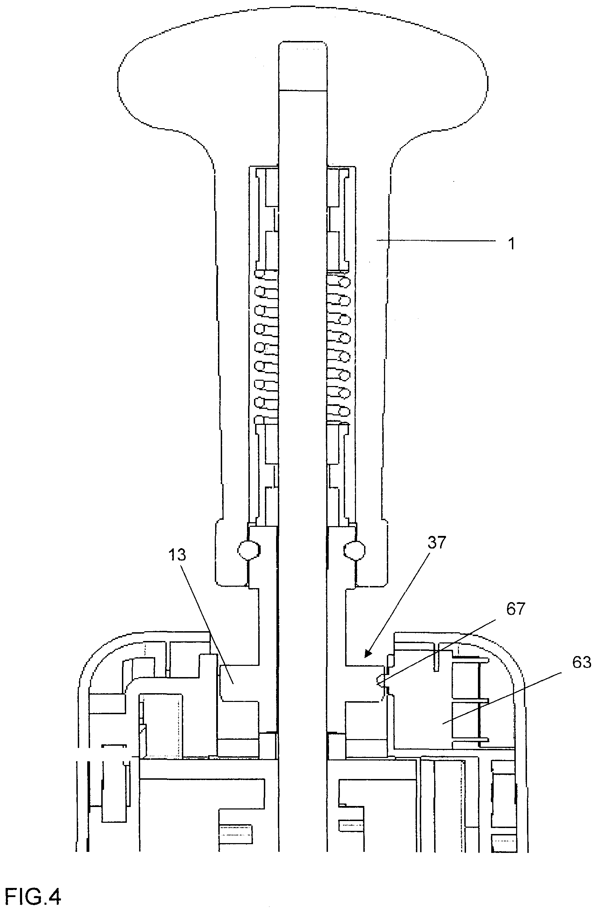

Wenn dann auf das Warnsignal hin, oder bereits gleich von Anfang an der Rastkörper 13 nach dem Stellen des Bedienhebels 1 in die Stellung "Parken" vollständig in die Kulissenöffnung 37 eingerastet ist, so wird, wie in Fig.4 gezeigt, der Schaltzapfen 67 vom Rastkörper 13 derart erfasst, dass der Schalter 63 umschaltet und somit den elektrischen Kreis trennt. In diesem Fall wird beispielsweise das erste elektrische Signal nicht erzeugt, woraufhin die Auswerteeinrichtung 65 ein optisch und/oder akustisch wahrnehmbares, eine stabil eingenommene Schwenkstellung "Parken" des Bedienhebels 1 symbolisierendes Freigabesignal erzeugt, weil dann der Rastkörper 13 vollständig in die Kulissenöffnung 37 eingerastet ist. Dieses Freigabesignal kann beispielsweise in einem Aufleuchten einer grünen Lampe bestehen, was dem Fahrer signalisiert, dass der Rastkörper 13 vollständig in die Kulissenöffnung 37 eingerastet ist und deshalb die beispielsweise der Stellung "Parken" entsprechende Schwenkposition des Bedienhebels 1 stabil eingenommen wurde.

Als erste Sensoreinrichtung 63 kann anstatt eines Berührungssensors selbstverständlich auch ein mit dem Rastkörper 13 berührungslos zusammen wirkender Sensor verwendet werden, wie beispielsweise ein Hall-Sensor.

### Zweites Ausführungsbeispiel

Gemäß einer zweiten Ausführungsform kann die elektronische Auswerteeinrichtung 65 ausgebildet sein, dass sie neben dem ersten elektrischen Signal ein zweites elektrisches Signal von einer oder von mehreren zweiten Sensoreinrichtungen 71 empfangen und verarbeiten bzw. auswerten kann. Das zweite elektrische Signal wird dann abhängig von einer bestehenden oder nicht bestehenden Zugriffsmöglichkeit des Fahrers des Fahrzeugs oder einer Bedienperson auf den Bedienhebel 1 bzw. auf den Schaltgriff 9 erzeugt. Die Auswerteeinrichtung 65 erzeugt dann abhängig von dem ersten elektrischen Signal und dem zweiten elektrischen Signal ein optisch und/oder akustisch wahrnehmbares Warnsignal oder ein Freigabesignal. Alternativ oder zusätzlich kann die Auswerteeinrichtung 65 ein automatisches Zuspannen wenigstens eines Parkbremsaktuators 73 der Parkbremse veranlassen. Das automatische Zuspannen der der Parkbremsaktuatoren 73 der Parkbremse des Fahrzeugs kann beispielsweise durch elektrische Ansteuerung eines oder mehrerer Magnetventile 75 erfolgen, durch welche die in der Regel von passiven Federspeicherbremszylindern vorliegenden Parkbremsaktuatoren 73 entlüftet und damit zugespannt werden. Dies ist in Fig.6 symbolisiert.

Das mittels der ersten Sensoreinrichtung 63 bei einem unvollständigen oder nicht erfolgten Einrasten des Rastkörpers 13 in die Kulissenöffnung 37 erzeugte erste elektrische Signal wird dann in der Auswerteeinrichtung 65 zusammen mit dem zweiten elektrischen Signal oder mehreren zweiten elektrischen Signalen, die von der zweiten Sensoreinrichtung oder von den zweiten Sensoreinrichtungen 71 abhängig von einer bestehenden oder nicht bestehenden Zugriffsmöglichkeit des Fahrers des Fahrzeugs oder einer Bedienperson auf den Bedienhebel 1 erzeugbar sind, ausgewertet.

Dabei muss beispielsweise das erste elektrische Signal, welches auf einen in die Kulissenöffnung 37 nicht oder unvollständig eingerasteten Rastkörper 13 hinweist, und das zweite elektrische Signal, welches auf eine nicht vorhandene Eingriffsmöglichkeit durch den Fahrer oder eine Bedienperson auf den Bedienhebel 1 des Parkbremsventils hindeutet, in einem in der Auswerteeinrichtung 65 implementierten UND-Gatter kumuliert vorliegen, um das Warnsignal 69 zu erzeugen und/oder die Parkbremsaktuatoren 73 automatisch zuzuspannen.

Als Indiz dafür, ob sich der Fahrer oder eine Bedienperson auf dem Fahrersitz und/oder in Betätigungsreichweite für eine Betätigung des Bedienhebels 1 befindet, kann das zweite elektrische Signal insbesondere in Abhängigkeit einer oder mehrerer der folgenden Situationen erzeugt werden:
- Anwesenheit bzw. Abwesenheit des Fahrers auf dem Fahrersitz oder in einer Fahrerkabine des Fahrzeugs, festgestellt beispielsweise durch ein Signal eines Sitzsensors als zweite Sensoreinrichtung 71, wobei eine Detektion eines nicht auf dem Fahrersitz anwesenden Fahrers auf eine nicht vorhandene Eingriffsmöglichkeit durch den Fahrer oder eine Bedienperson hindeutet,
- Anlegezustand (Sicherheitsgurt angelegt oder nicht angelegt) eines dem Fahrersitz zugeordneten Sicherheitsgurts, festgestellt beispielsweise durch ein Signal eines Gurtschlosssensors als zweite Sensoreinrichtung 71, wobei eine Detektion eines nicht angelegten Sicherheitsgurtes auf eine nicht vorhandene Eingriffsmöglichkeit durch den Fahrer oder eine Bedienperson hindeutet,
- Betriebszustand der Zündung des Kraftfahrzeugs (Zündung "an" oder "aus"), festgestellt beispielsweise durch ein Signal eines Zündschlosssensors als zweite Sensoreinrichtung 71, wobei eine Detektion einer ausgeschalteten Zündung des Fahrzeugs auf eine nicht vorhandene Eingriffsmöglichkeit durch den Fahrer oder eine Bedienperson hindeutet,
- Kippzustand eines kippbaren Fahrerhauses des Fahrzeugs, falls es sich um ein schweres Nutzfahrzeug mit kippbarem Fahrerhaus handelt, festgestellt beispielsweise durch ein Signal eines Sensors eines Verriegelungsschlosses des Kippmechanismus des Fahrerhauses als zweite Sensoreinrichtung 71, wobei eine Detektion eines gekippten Fahrerhauses auf eine nicht vorhandene Eingriffsmöglichkeit durch den Fahrer oder eine Bedienperson hindeutet,
- Schaltzustand eines Getriebes des Fahrzeugs, festgestellt beispielsweise durch ein Signal eines Getriebesensors als zweite Sensoreinrichtung 71, wobei eine Detektion eines einem Stillstand oder Parkzustand des Fahrzeugs entsprechenden Gangwahl des Getriebes auf eine nicht vorhandene Eingriffsmöglichkeit durch den Fahrer oder eine Bedienperson hindeutet,
- Druck in einem Parkbremsaktuator der Parkbremseinrichtung wie einem passiven pneumatischen Federspeicherbremszylinder, festgestellt beispielsweise durch ein Signal eines Drucksensors als zweite Sensoreinrichtung 71, wobei eine Detektion eines niedrigen und unterhalb eines Lösedrucks liegenden Drucks im Federspeicherbremszylinder auf einen zugespannten Federspeicherbremszylinder, folglich auf einen Parkzustand des Fahrzeugs und damit eine nicht vorhandene Eingriffsmöglichkeit durch den Fahrer oder eine Bedienperson hindeutet.

Diese Auflistung ist nicht abschließend, mithin sind weitere Indizien denkbar, welche auf eine nicht vorhandene Eingriffsmöglichkeit durch den Fahrer oder eine Bedienperson auf den Bedienhebel 1 des Parkbremsventils hindeuten. Hierzu werden die Signale bereits im Fahrzeug ohnehin vorhandener, oben beschriebener zweiter Sensoreinrichtungen 71 als zweite elektrische Signale für die Auswerteeinrichtung 65 genutzt.

Selbstverständlich kann auch bei dieser zweiten Ausführungsform ein Freigabesignal 69 durch die Auswerteeinrichtung 65 erzeugt werden, falls kein erstes elektrisches Signal von der ersten Sensoreinrichtung 63 in die Auswerteeinrichtung 65 eingesteuert wird, um auf eine stabil eingenommene Schwenkstellung des Bedienhebels 1 des Parkbremsventils hinzuweisen.

### Drittes Ausführungsbeispiel

Gemäß einer dritten Ausführungsform kann das Zusammenwirken zwischen dem Bedienhebel 1 bzw. dem Rastkörper 13 und dem durch direkte oder indirekte Berührung betätigbaren Schalter 63 mittels eines Federelements 16 realisiert werden, wobei der Rastkörper 13 über das Federelement 16 auf das Schaltorgan 67 des Schalters 63 einwirkt und dabei ein stabiles erstes elektrisches Signal erzeugt wird, das der Auswerteeinrichtung 65 zur weiteren Verarbeitung zugeführt wird. Bevorzugt wirkt dabei das Federelement 16 zusätzlich mit einem Kipphebelmechanismus 2 zusammen. Jedoch ist auch eine Wirkverbindung zwischen dem Rastkörper 13 und dem Schaltorgan 67 ohne den Kipphebelmechanismus 2 denkbar.

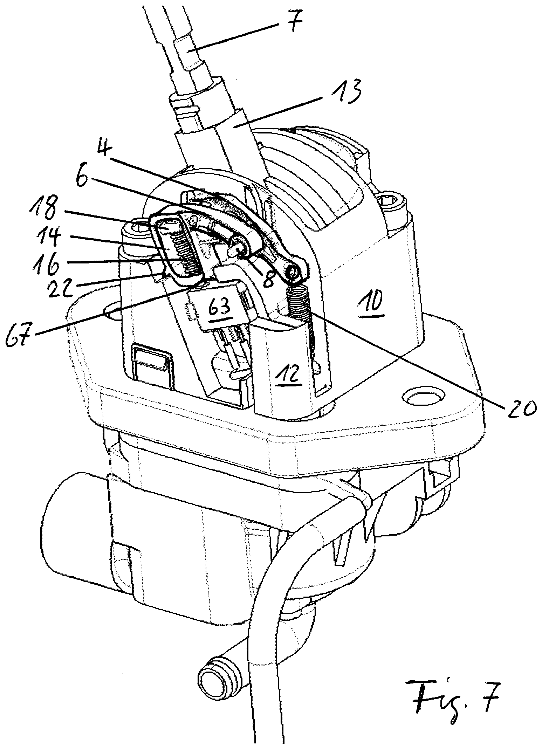

Hierzu zeigen Figuren 7 bis 11 Darstellungen eines Parkbremsventils mit einem Kipphebelmechanismus 2 und einem Federelement 16 zusammen mit der ersten Sensoreinrichtung in Form eines Mikroschalters 63. Der Kipphebelmechanismus 2 ist seitlich an einem Kulissengehäuse 10 als Teil des Ventilgehäuses des Parkbremsventils angeordnet. Der Kipphebelmechanismus 2 weist einen ersten Kipphebel 4 und einen zweiten Kipphebel 6 auf, die um eine gemeinsame Schwenkachse 8 drehbar angeordnet sind. Die Schwenkachse 8 ist mit ihrem einen Ende in der Gehäusewand des Kulissengehäuses 10 und mit ihrem anderen Ende in einem in den Figuren 7 bis 11 nur in seinem unteren Teil gezeigten Tragarm 12 des Kulissengehäuses 10 gelagert.

Der Mikroschalter 63 ist unterhalb des zweiten Kipphebels 6 und in Bezug zur Schwenkachse 8 beabstandet angeordnet, so dass der zweite Kipphebel 6 bei einer Drehbewegung auf das Schaltorgan 67, hier beispielsweise ein Taster, in dessen Betätigungsrichtung hier beispielsweise annährend senkrecht einwirken kann. Dadurch werden Schaltkontakte (hier nicht gezeigt) innerhalb des Mikroschalters 63 betätigt.

Der zweite Kipphebel 6 weist beabstandet von der Schwenkachse 8 eine rahmenförmige Ausnehmung 14 auf, in welcher ein Federelement 16 unter Vorspannung als Druckfeder aufgenommen ist, die so eingestellt ist, dass sie einen in die Ausnehmung 14 hineinragenden ersten Zapfen 18 des ersten Kipphebels 4 an einen oberen inneren Rand der Ausnehmung 14 drängt, wodurch zwischen dem ersten Kipphebel 4 und dem zweiten Kipphebel 6 eine elastische Wirkverbindung hergestellt wird, die weiter unten noch näher beschrieben wird.

Der in die Ausnehmung 14 hineinragende erste Zapfen 18 ist Bestandteil des Endes des ersten Kipphebels 4 und ist mit diesem beispielsweise unlösbar verbunden, so dass der erste Zapfen 18 und der Kipphebel 4 vorzugsweise einstückig beispielsweise als Spritzgussformling aus Kunststoff gefertigt sind.

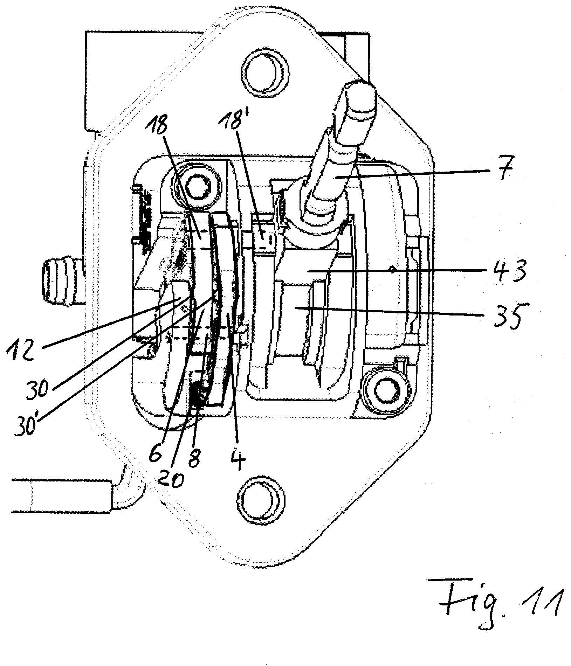

Vom ersten Zapfen 18 weg weisend ist am gleichen Ende des ersten Kipphebels 4 ein zweiter, bevorzugt ebenfalls mit dem ersten Kipphebel 4 einstückiger Zapfen 18' angeordnet (siehe Fig. 11).

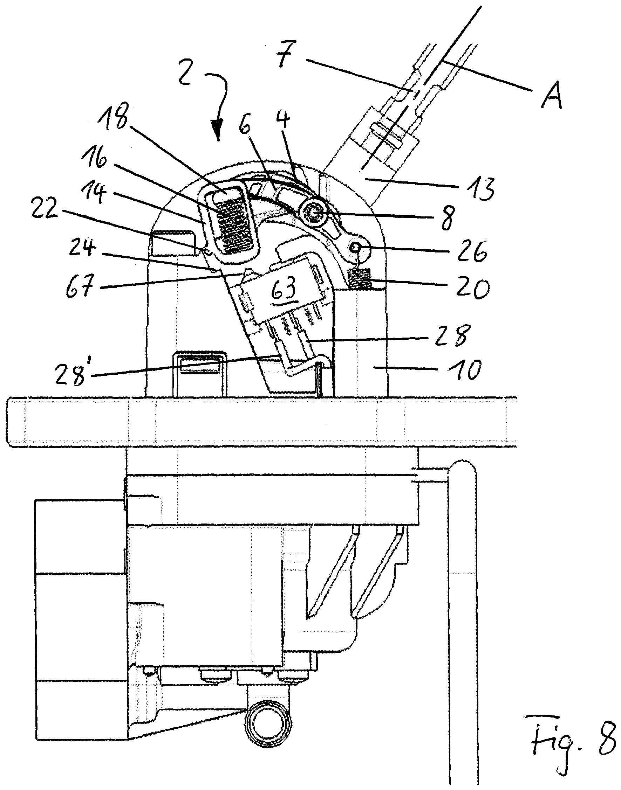

Sobald in der Betriebsstellung C "Parken" der Rastkörper 13 mit dem Rastbund 43 über die Schaltstange 7 nach unten gedrückt wird, wird die dabei ausgeübte Kraft über das Rastbund 43 auf den zweiten Zapfen 18' am Ende des ersten Kipphebels 4 übertragen, so dass der drehbar gelagerte erste Kipphebel 4 in Fig.7 gegen den Uhrzeigersinn schwenkt und sein die Zapfen 18, 18' tragendes Ende nach unten senkt. Hierbei muss die Zugkraft eines am anderen Ende des ersten Kipphebels 4 angeordneten weiteren, hier als Zugfeder ausgeführten Federelements 20 überwunden werden, damit der erste Kipphebel 4 verschwenkt werden kann. Die Schwenkachse 8 des ersten Kipphebels 4 ist dabei einerseits dem Ende mit den beiden Zapfen 18, 18' und andererseits dem Ende mit der Anlenkung des weiteren Federelements 20 zwischengeordnet (Fig.8). Das weitere Federelement 20 ist mit seinem einen Ende an einem Ende des ersten Kipphebels 4 in einer Bohrung 26 und mit seinem anderen Ende am Ventilgehäuse lösbar befestigt.

Fig.11 zeigt eine perspektivische Draufsicht auf das Parkbremsventil, mit dem Bedienhebel 1 in der Betriebsstellung "Parken". Dort ist der Kulissenschlitz 35 und der Rastbund 43 auf der Schaltstange 7 sichtbar, sowie der seitlich am Kulissengehäuse 10 angeordnete Kipphebelmechanismus 2 mit erstem und zweitem Kipphebel 4, 6. Der erste und der zweite Kipphebel 4, 6 sind vorzugsweise unmittelbar und parallel nebeneinander angeordnet und um die gemeinsame Schwenkachse 8 drehbar gelagert, die auf der einen Seite vom Tragarm 12 und auf der anderen Seiten von einer Seitenwand des Kulissengehäuses 10 aufgenommen wird. Um die Reibung zwischen den Kipphebeln 4, 6 möglichst gering zu halten, sind jeweils an einer Seite eines jeden Kipphebels 4, 6 sich in Schwenkrichtung erstreckende Nocken 30, 30' angeordnet, mit denen die Kipphebel 4, 6 auf Distanz zueinander und zu benachbarten Flächen gehalten werden. In der Betriebsstellung C "Parken" steht der Rastbund 43 des Rastelements 13 in gleitendem Kontakt mit dem zweiten Zapfen 18' des ersten Kipphebels 4.

Die Abmessung (Breite) des zweiten Zapfens 18' in Betätigungsrichtung des Bedienhebels 1 ist dabei so bemessen, dass der zweite Zapfen 18' mit dem Rastbund 43 auch weiterhin in gleitendem Kontakt bleibt, wenn die Schaltstange 7 in die Betriebstellung D "Teststellung" gebracht und dazu zunächst mittels des Schaltgriffs 9 nach unten gedrückt wird. Der Rastbund 43 drängt daher in der Betriebsstellung C "Parken" den zweiten Zapfen 18' daher zunächst nach unten und gleitet, nach weiterem Drängen des zweiten Zapfens 18' nach unten beim nachfolgenden Schwenken des Bedienhebels 1 in die Betriebsstellung D "Teststellung" an dem zweiten Zapfen 18' entlang, der seine Umfangsposition in Bezug zur Schwenkbewegung des Bedienhebels 1 nicht verändert.

Infolge der Anordnung des einen Federelements 16 zwischen dem ersten Zapfen 18 und einer Stützfläche in der Ausnehmung 14 wird die vom Rastelement 13 bzw. von dessen Rastbund 43 ausgeübte Kraft auf den zweiten Kipphebel 6 übertragen, wodurch dieser um die Schwenkachse 8 verschwenkt wird und mit einer unteren Kontaktfläche im Bereich der Ausnehmung 14 das Schaltorgan 67 des Schalters 63 kontaktiert, um ihn zur Erzeugung eines elektrischen Signals umzuschalten.

Bei einer weiteren Verschiebung des Rastelements 13 nach unten, um den Bedienhebel 1 bzw. die Schaltstange 7 in die Betriebsstellung D "Teststellung" verschieben zu können, wird der erste Zapfen 18 bzw. das Ende des ersten Kipphebels 4 weiter nach unten verschwenkt, wodurch das eine Federelement 16 noch weiter komprimiert wird, aber den Schaltzustand des Schalters 63 dabei nicht ändert, obwohl die Betätigungskraft auf das Schaltorgan 67 ansteigt. Denn an dem zweiten Kipphebel ist ein Vorsprung 22 ausgebildet, der an einem Begrenzungsanschlag 24 am Ventilgehäuse anschlägt, sobald das Rastelement 13 in der Betriebsstellung "Parken" vollständig in die Kulissenöffnung 37 eingerastet ist bzw. der zweite Kipphebel 6 eine entsprechende Schwenkstellung eingenommen hat, so dass trotz weiterer Kompression des einen Federelements 16 die auf das Schaltorgan 67 des Schalters 63 wirkende Kraft konstant bleibt.

In dieser maximal herabgedrückten Stellung des Rastkörpers 13 kann nun der Bedienhebel 1 bzw. die Schaltstange 7 in die Betriebsposition D "Teststellung" verschoben werden, um die Parkbremswirkung der Zugmaschine, an die der dann ungebremste Anhänger angekoppelt ist, zu testen, ohne das die Gefahr besteht, dass das vom Schalter 63 erzeugte elektrische Signal auch nur kurzzeitig unterbrochen wird, was zu Fehlinterpretationen in der elektronischen Auswerteeinheit 65 führen könnte. Der elektrische Schaltzustand des Schalters 63 bleibt somit also während des Stellens des Bedienhebels 1 von der Betriebsstellung C "Parken" in die Betriebsstellung D "Teststellung" stabil und zuverlässig erhalten, so dass die elektronische Auswerteeinrichtung 65 keine mehrdeutigen Signale erhält.

Fig.8 zeigt eine Seitenansicht des Parkbremsventils, bei dem der Bedienhebel 1 bzw. die Schaltstange 7 in der Betriebsstellung A "Fahren" positioniert ist. In dieser Betriebsstellung A "Fahren" kontaktiert der Rastkörper 13 den Kipphebelmechanismus 2 bzw. den zweiten Zapfen 18' des ersten Kipphebels 4 nicht, was dazu führt, dass sich die beiden Kipphebel 4, 6 in ihrer federvorgespannten Grundstellung befinden. In dieser Grundstellung wird aufgrund der Zugwirkung des weiteren Federelements 20 auf das eine Ende des ersten Kipphebels 4 und die Kipphebellagerung an der Schwenkachse 8 dessen anderes Ende zusammen mit dem ersten Zapfen 18 nach oben gezogen, wodurch infolge der bereits durch das eine vorgespannte Federelement 16 hervorgerufene Kontakts des ersten Zapfens 18 mit dem oberen inneren Rand der Ausnehmung 14 verstärkt wird und dadurch der zweite Kipphebel 6 im Uhrzeigersinn belastet wird. Dann wird insbesondere der untere Rand der Ausnehmung 14 des zweiten Kipphebels 6 nach oben gezogen, so dass sich zwischen dem zweiten Kipphebel 6 und dem Schaltorgan 67 ein in Fig.8 sichtbarer lichter Spalt bildet. Dabei kann der Schalter 63 nicht umgeschaltet werden.

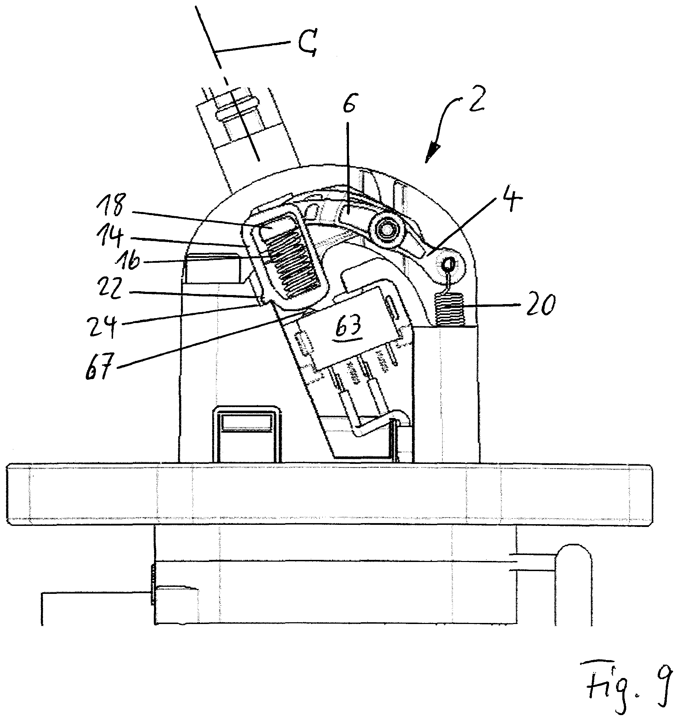

Bei der in Fig.9 gezeigten Seitenansicht des Parkbremsventils ist der Bedienhebel 1 bzw. die Schaltstange 7 in die Betriebsposition C "Parken" gestellt worden und der Rastkörper 13 ist vollständig in die Kulissenöffnung 37 eingetaucht bzw. eingerastet. Dabei drückt das Rastelement 13 bzw. dessen Rastbund 43 von oben auf den zweiten Zapfen 18' des ersten Kipphebels 4, wodurch dessen erster Zapfen 18 die Druckkraft auf das eine vorgespannte Federelement 16 überträgt, das wiederum die Druckkraft auf den zweiten Kipphebel 6 überträgt, wodurch dieser zusammen mit dem ersten Kipphebel 4 um die Schwenkachse im Gegenuhrzeigersinn schwenkt, bis der Vorsprung 22 am Begrenzungsanschlag 24 anschlägt. In dieser durch das Zusammenwirken von Vorsprung 22 und Begrenzungsanschlag 24 definierten Schwenkposition des zweiten Kipphebels 6 vermag dieser das Schaltorgan 67 des Schalters 63 gerade derart zu betätigen, dass dieser umschaltet. Dabei gerät jedoch beispielsweise der erste Zapfen 18 des ersten Kipphebels 4 noch nicht außer Kontakt mit dem oberen, inneren Rand der Ausnehmung 14, was durch die Vorspannkraft des einen Federelements 16 wie auch durch die rückstellende Zugkraft des weiteren Federelements 20 unterstützt wird.

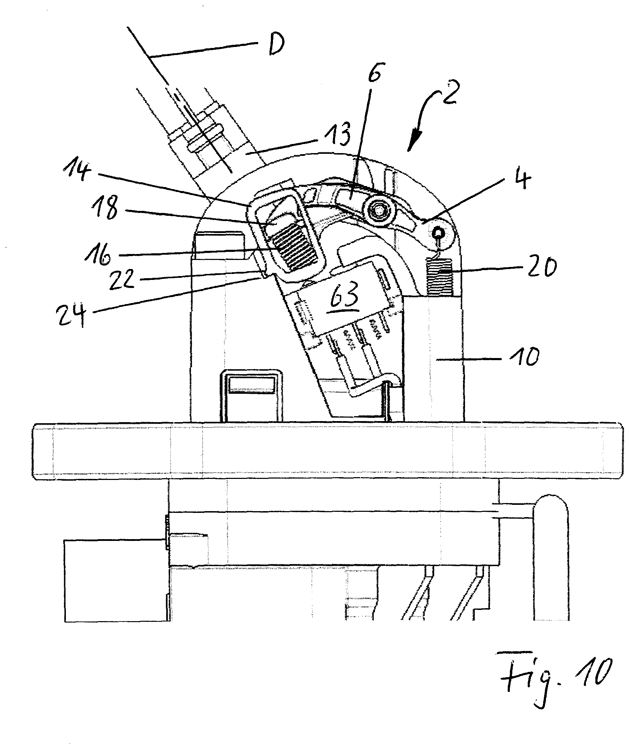

Erst wenn zum Herbeiführen der Betriebsposition D "Teststellung" (siehe Fig. 10) durch weiteres Herabdrücken des Rastkörpers 13 in die Kulissenöffnung 37 der zweite Zapfen 18' und damit auch der erste Zapfen 18 des ersten Kipphebels 4 unter Verschwenken des ersten Kipphebels 4 im Gegenuhrzeigersinn nach unten gedrängt werden, wird das eine Federelement 16 unter Verkürzung seiner Länge so komprimiert, dass der erste Zapfen 18 außer Kontakt mit dem oberen inneren Rand der Ausnehmung 14 gerät. Diese weitere Kompression des einen Federelements 16 bzw. das Schwenken des ersten Kipphebels 4 im Gegenuhrzeigersinn hat aber keinerlei Auswirkung auf die auf das Schaltorgan 67 des Schalters 63 ausgeübte Betätigungskraft, weil ein weiteres Verschwenken des zweiten Kipphebels 6 durch den stabilen Anschlag dessen Vorsprungs 22 am Begrenzungsanschlag 24 verhindert wird, so dass die auf das Schaltorgan 67 ausgeübte Betätigungskraft konstant bleibt. Somit wird dann auch der Schaltzustand des Schalters 63 beim Stellen des Bedienhebels 1 von der Stellung "Parken" in die Stellung "Teststellung" bzw. in umgekehrter Richtung nicht mehr verändert.

Selbstverständlich können im Rahmen der Erfindung einzelne Merkmale der oben beschriebenen Ausführungsbeispiele auch miteinander in beliebiger Weise miteinander kombiniert werden.

### Bezugszahlenliste

- 1: Bedienhebel
- 2: Hebelmechanik
- 3: Schaltkulisse
- 4: erster Kipphebel
- 5: Steuerkörper
- 6: zweiter Kipphebel
- 7: Schaltstangen
- 8: Schwenkachse
- 9: Schaltgriff
- 10: Kulissengehäuse
- 11: Schalthülse
- 12: Tragarm
- 13: Rastkörper
- 14: rahmenförmige Ausnehmung
- 15: Schutzhülse
- 16: Federelement
- 17: Rastierfeder
- 18: erster Zapfen
- 18': zweiter Zapfen
- 19: Sicherungsring
- 20: weiteres Federelement
- 21: Anschlagring
- 22: Vorsprung
- 23: Schulter
- 24: Begrenzungsanschlag
- 25: Hebefeder
- 26: Bohrung
- 27: Feder
- 28: elektrische Leitungen
- 29: Anschlaghülse
- 30: Nocken
- 30': Nocken
- 31: Anschlagring
- 33: Schulter
- 35: Kulissenschlitz
- 37: Kulissenöffnung
- 43: Rastbund
- 45: Anschlagschulter
- 47: Anschlagring
- 49: Anschlagring
- 51: Absatz
- 53: Feder
- 55: Anschlagring
- 57: Anschlagring
- 59: Anschlagring
- 61: Anschlagschulter
- 63: erste Sensoreinrichtung
- 65: Auswerteeinrichtung
- 67: Schaltorgan
- 69: Warnsignal/Freigabesignal
- 71: zweite Sensoreinrichtung
- 73: Parkbremsaktuator
- 75: Magnetventil

## Patentansprüche

1. Parkbremseinrichtung eines Fahrzeugs mit einem pneumatischen Parkbremsventil, welches einen an einer Schaltkulisse (3) eines Ventilgehäuses in unterschiedliche Schwenkpositionen (A, B, C, D) schwenkbar geführten und mit einem Steuerkörper (5) zur Betätigung eines Parkbremsventilmechanismus verbundenen Bedienhebel (1) aufweist, mit einem Mechanismus zum Einrasten und Lösen eines Rastkörpers (13) bezüglich einer Kulissenöffnung (37) der Schaltkulisse (3) wenigstens in einer den Betriebszustand "Parken" repräsentierenden Schwenkposition (C) des Bedienhebels (1), wobei eine mit dem Rastkörper (13) zusammenwirkende erste Sensoreinrichtung (63) vorgesehen ist, welche derart ausgebildet ist, dass sie abhängig von einem vollständigen oder nicht vollständigen bzw. nicht erfolgten Einrasten des Rastkörpers (13) in die Kulissenöffnung (37) der Schaltkulisse (3) ein erstes elektrisches Signal für eine elektronische Auswerteeinrichtung (65) erzeugt, **dadurch gekennzeichnet, dass** die elektronische Auswerteeinrichtung (65) ausgebildet ist, dass sie neben dem ersten elektrischen Signal ein zweites elektrisches Signal empfängt und verarbeitet, welches abhängig von einer bestehenden oder nicht bestehenden Zugriffsmöglichkeit des Fahrers des Fahrzeugs auf den Bedienhebel von wenigstens einer zweiten Sensoreinrichtung (71) erzeugt wird, wobei die elektronische Auswerteeinrichtung (65) abhängig von dem ersten elektrischen Signal und dem zweiten elektrischen Signal ein optisch und/oder akustisch wahrnehmbares Warnsignal (69) oder ein Freigabesignal (69) erzeugt und/oder ein automatisches Zuspannen wenigstens eines Parkbremsaktuators (73) veranlasst.

2. Parkbremseinrichtung nach Anspruch 1, **dadurch gekennzeichnet, dass** einem Erzeugen des ersten elektrischen Signals und einem Nicht-Erzeugen des ersten elektrischen Signals durch die erste Sensoreinrichtung (63) zwei unterscheidbare Signalzustände mit unterschiedlichen Signalpegeln entsprechen.

3. Parkbremseinrichtung nach einem der vorhergehenden Ansprüche, **dadurch gekennzeichnet, dass** die erste Sensoreinrichtung (63) einen mit dem Rastkörper (13) berührungslos zusammen wirkenden Sensor umfasst.

4. Parkbremseinrichtung nach Anspruch 3, **dadurch gekennzeichnet, dass** die erste Sensoreinrichtung (63) wenigstens einen Hall-Sensor umfasst.

5. Parkbremseinrichtung nach Anspruch 1 oder 2, **dadurch gekennzeichnet, dass** die erste Sensoreinrichtung einen elektrischen Schalter (63) mit einem vom Rastkörper (13) direkt oder indirekt kontaktierbaren Schaltorgan (67) umfasst, wobei der elektrische Schalter (63) derart angeordnet ist, dass das Schaltorgan (67) den Schalter (63) bei nicht oder nicht vollständig in die Kulissenöffnung (37) eingerastetem Rastkörper (13) nicht von einer ersten Schaltposition in eine zweite Schaltposition zu überführen vermag, ihn aber bei vollständig in die Kulissenöffnung (37) eingerastetem Rastkörper (13) von der ersten Schaltposition in die zweite Schaltposition überführt.

6. Parkbremseinrichtung nach einem der vorhergehenden Ansprüche, **dadurch gekennzeichnet, dass** die erste Sensoreinrichtung (63) derart ausgebildet ist, dass bei einem mittels der ersten Sensoreinrichtung (63) detektiertem nicht oder nicht vollständig erfolgten Einrasten des Rastkörpers (13) in die Kulissenöffnung (37) das erste elektrische Signal für die Auswerteeinrichtung (65) erzeugt und bei mittels der ersten Sensoreinrichtung (63) detektiertem vollständigen Einrasten des Rastkörpers (13) in die Kulissenöffnung (37) das erste elektrische Signal für die Auswerteeinrichtung (65) nicht erzeugt wird.

7. Parkbremseinrichtung nach Anspruch 6, **dadurch gekennzeichnet, dass** die elektronische Auswerteeinrichtung (65) ausgebildet ist, dass sie im Falle einer unterbliebenen Erzeugung und/oder einer unterbliebenen Einsteuerung des ersten elektrischen Signals ein optisch und/oder akustisch wahrnehmbares, eine stabil eingenommene Schwenkstellung des Bedienhebels (1) symbolisierendes Freigabesignal (69) erzeugt.

8. Parkbremseinrichtung nach Anspruch 6 oder 7, **dadurch gekennzeichnet, dass** die elektronische Auswerteeinrichtung (65) ausgebildet ist, dass sie im Falle einer Erzeugung und/oder Einsteuerung des ersten elektrischen Signals ein optisch und/oder akustisch wahrnehmbares Warnsignal (69) erzeugt.

9. Parkbremseinrichtung nach einem der vorhergehenden Ansprüche, **dadurch gekennzeichnet, dass** das zweite elektrische Signal abhängig von einer Anwesenheit des Fahrers auf einem Fahrersitz und/oder von einer Anwesenheit des Fahrers in einer Fahrerkabine und/oder von einem angelegten oder nicht angelegten Gurt eines dem Fahrersitz zugeordneten Sicherheitsgurts und/oder abhängig von einem Betriebszustand der Zündung des Kraftfahrzeugs und/oder abhängig von einem Kippzustand eines kippbaren Fahrerhauses des Fahrzeugs und/oder vom Schaltzustand eines Getriebes des Fahrzeugs und/oder abhängig vom Signal eines den Druck in wenigstens einem Parkbremsaktuator überwachenden Drucksensors erzeugt wird.

10. Parkbremseinrichtung nach Anspruch 9, **dadurch gekennzeichnet, dass** ein Erzeugen des zweiten elektrischen Signals und ein Nicht-Erzeugen des zweiten elektrischen Signals zwei unterscheidbaren Signalzuständen mit unterschiedlichen Signalpegeln entsprechen.

11. Parkbremseinrichtung nach einem der vorhergehenden Ansprüche, **dadurch gekennzeichnet, dass** die elektronische Auswerteeinrichtung (65) einen Mikrocomputer umfasst.

12. Parkbremseinrichtung nach Anspruch 5, **gekennzeichnet durch** wenigstens ein Federelement (16) als Wirkverbindung zwischen dem Schaltorgan (67) der ersten Sensoreinrichtung (63) und dem Rastkörper (13), das derart ausgeführt und angeordnet ist, dass bei vollständig in die Kulissenöffnung (37) eingerastetem Rastkörper (13) der Rastkörper (13) eine Kraft auf das wenigstens eine Federelement (16) ausübt, welches die Kraft auf das Schaltorgan (67) des Schalters (63) direkt oder indirekt überträgt, um ihn von der ersten Schaltposition in die zweite Schaltposition zu überführen.

13. Parkbremseinrichtung nach Anspruch 12, **dadurch gekennzeichnet, dass** das wenigstens eine Federelement (16) an wenigstens einem am Ventilgehäuse schwenkbar gelagerten Kipphebel (4, 6) eines Kipphebelmechanismus (2) abgestützt ist, der zumindest in der den Betriebszustand "Parken" repräsentierenden Schwenkposition (C) des Bedienhebels (1) einerseits mit dem Rastelement (13) und andererseits mit dem Schaltorgan (67) des Schalters (63) in Kontakt gebracht ist.

14. Parkbremseinrichtung nach Anspruch 13, **dadurch gekennzeichnet, dass** das wenigstens eine Federelement (16) eine komprimierbare Druckfeder beinhaltet, welche zwischen zwei Kipphebeln (4, 6) des Kipphebelmechanismus (2) vorgespannt gelagert ist, einem ersten um eine Schwenkachse (8) schwenkbaren Kipphebel (4) und einem zweiten um eine Schwenkachse (8) schwenkbaren Kipphebel (6), wobei das Rastelement (13) beim Einrasten in die Kulissenöffnung (37) mit dem ersten Kipphebel (4) in Kontakt gerät, welcher unter Schwenkbewegung um seine Schwenkachse (8) eine Druckkraft auf das wenigstens eine Federelement (16) ausübt, das die Druckkraft auf den zweiten Kipphebel (6) überträgt, der unter Schwenkbewegung um seine Schwenkachse (8) das Schaltorgan (67) des Schalters (63) kontaktiert, um ihn von der ersten Schaltposition in die zweite Schaltposition zu überführen.

15. Parkbremseinrichtung nach Anspruch 14, **dadurch gekennzeichnet, dass** eine Anschlageinrichtung (22, 24) vorgesehen ist, welche eine Schwenkbewegung des zweiten Kipphebels (6) über eine definierte, ein eindeutiges Umschalten des Schalters (63) bewirkende Schwenkstellung hinaus verhindert.

16. Parkbremseinrichtung nach Anspruch 15, **dadurch gekennzeichnet, dass** der zweite Kipphebel (6) einen Vorsprung (22) aufweist, der bei in die Kulissenöffnung (37) vollständig eingerastetem Rastkörper (13) einen Begrenzungsanschlag (24) am Ventilgehäuse kontaktiert.

17. Parkbremseinrichtung nach einem der Ansprüche 14 bis 16, **dadurch gekennzeichnet, dass** der erste und der zweite Kipphebel (4, 6) eine gemeinsame Schwenkachse (8) aufweisen.

18. Parkbremseinrichtung nach einem der Ansprüche 14 bis 17, **dadurch gekennzeichnet, dass** ein einerseits am Ventilgehäuse und andererseits am ersten Kipphebel (4) angekoppeltes weiteres Federelement (20) den ersten Kipphebel (4) einerseits in der den Betriebszustand "Parken" repräsentierenden Schwenkposition (C) des Bedienhebels (1) in Kontakt mit dem Rastkörper (13) und andererseits in Kontakt mit dem zweiten Kipphebel (6) vorspannt.

19. Parkbremseinrichtung nach einem der Ansprüche 14 bis 18, **dadurch gekennzeichnet, dass** an dem ersten Kipphebel (4) zwei Zapfen (18, 18') angeordnet sind, von denen ein erster Zapfen (18) einerseits eine Abstützfläche für das wenigstens eine Federelement (16) und andererseits eine Kontaktfläche für den zweiten Kipphebel (6) und ein zweiter Zapfen (18') eine Kontaktfläche für den Rastkörper (13) aufweist.

20. Parkbremseinrichtung nach Anspruch 19, **dadurch gekennzeichnet, dass** der zweite Kipphebel (6) eine rahmenförmige Ausnehmung (14) aufweist, in welche der erste Zapfen (18) des ersten Kipphebels (4) hineinragt, wobei das wenigstens eine Federelement (16) zwischen dem ersten Zapfen (18) und einer Stützfläche in der rahmenförmigen Ausnehmung (14) aufgenommen ist.

21. Parkbremseinrichtung nach Anspruch 19 oder 20, **dadurch gekennzeichnet, dass** in Bewegungsrichtung des Rastkörpers (13) entlang der Kulisse (3) gesehen die Dimension des zweiten Zapfens (18') derart bemessen ist, dass der Rastkörper (13) sowohl in der den Betriebszustand "Parken" repräsentierenden Schwenkposition (C) des Bedienhebels (1) als auch in einer einen Betriebszustand "Teststellung" repräsentierenden Schwenkposition (D) des Bedienhebels (1) den zweiten Zapfen (18') kontaktiert, wobei ausgehend von der den Betriebszustand "Parken" repräsentierenden Schwenkposition (C) der Rastkörper (13) zunächst über die Raststellung in der Kulissenöffnung (37) hinaus nach radial innen unterhalb des Niveaus der Schaltkulisse (3) unter weiterer Kompression des wenigstens einen Federelements (16) gebracht wird und dann durch nachfolgendes Verschwenken des Bedienhebels (1) in die den Betriebszustand "Teststellung" repräsentierende Schwenkposition (D) unterhalb der Schaltkulisse (3) entlang gleitet.

22. Fahrzeug, beinhaltend eine Parkbremseinrichtung nach einem der vorhergehenden Ansprüche.

## Claims

1. A parking brake device of a vehicle, having a pneumatic parking brake valve that has an operating lever (1) that is guided in a switching slotted guide (3) of a valve housing such that it can be pivoted into different pivoting positions (A, B, C, D) and that is connected to a control body (5) for actuating a parking brake valve mechanism, having a mechanism for engaging and releasing a detent body (13) in relation to a slotted-guide opening (37) of the switching slotted guide (3) at least in a pivoting position (C) of the operating lever (1) representing the "parking" operating state, there being provided a first sensor device (63) that cooperates with the detent body (13) and is designed such that it generates a first electrical signal for an electronic evaluating device (65) dependent on whether the detent body (13) is engaged fully, partially or not at all in the slotted-guide opening (37) switching slotted guide (3), **characterised in that** the electronic evaluation device (65) is designed such that in addition to the first electrical signal it also receives and processes a second electrical signal that is generated dependent on whether or not the driver of the vehicle is able to access the operating lever of at least one second sensor device (71), the electronic evaluating device (65) generating an optically and/or acoustically perceptible warning signal (69) or a release signal (69) dependent on the first electrical signal and the second electrical signal and/or initiating an automatic application of at least one parking brake actuator (73)

2. A parking brake device according to claim 1, **characterised in that** two distinguishable signal states, with different signal levels correspond to the generation of the first electrical signal and the non-generation of the first electrical signal by the first sensor device (63).

3. A parking brake device according to any of the preceding claims, **characterised in that** the first sensor device (63) comprises a sensor that cooperates in contactless fashion with the detent body (13).

4. A parking brake device according to claim 3, **characterised in that** the first sensor device (63) comprises at least one Hall sensor.

5. A parking brake device according to claim 1 or 2, **characterised in that** the first sensor device comprises an electrical switch (63) having a switching element (67) with which the detent body (13) can make direct or indirect contact, the electrical switch (63) being arranged such that the switching element (67) is unable to move the switch (63) from a first switch position into a second switch position when the detent body (13) is not or not fully engaged in the slotted-guide opening (37) but moves it from the first switch position into the second switch position when the detent body (13) is fully engaged in the slotted-guide opening (37).

6. A parking brake device according to any of the preceding claims, **characterised in that** the first sensor device (63) is designed such that the first electrical signal for the evaluation device (65) is generated when the first sensor device (63) detects that the detent body (13) is not or not fully engaged in the slotted-guide opening (37) and that the first electrical signal for the evaluation device (65) is not generated when the first sensor device (63) detects that the detent body (13) is fully engaged in the slotted-guide opening (37).

7. A parking brake device according to claim 6, **characterised in that** the electronic evaluation device (65) is designed such that it generates a visually and/or acoustically perceptible release signal (69) symbolising that a stable pivot position of the operating lever (1) has been assumed if the first electrical signal is not generated and/or input.

8. A parking brake device according to claim 6 or 7, **characterised in that** the electronic evaluation device (65) is designed such that it generates a visually and/or acoustically perceptible warning signal (69) if the first electrical signal is generated and/or input.

9. A parking brake device according to any of the preceding claims, **characterised in that** the second electrical signal is generated dependent on the presence of the driver on a driver's seat and/or on the presence of the driver in a driver's cab and/or on whether or not a belt of a safety belt assigned to the driver's seat is fastened and/or dependent on an operating state of the ignition of the motor vehicle and/or dependent on a tilt state of a tiltable driver's cab of the vehicle and/or on the shift state of a transmission of the vehicle and/or dependent on the signal of a pressure sensor that monitors the pressure in at least one parking brake actuator.

10. A parking brake device according to claim 9, **characterised in that** the generation of the second electrical signal and the non-generation of the second electrical signal correspond to two distinguishable signal states with different signal levels.

11. A parking brake device according to any of the preceding claims, **characterised in that** the electronic evaluation device (65) comprises a microcomputer.

12. A parking brake device according to claim 5, **characterised by** at least one spring element (16) as an operative connection between the switching element (67) of the first sensor device (63) and the detent body (13), said at least one spring element being designed and arranged such that when the detent body (13) is fully engaged in the slotted-guide opening (37) the detent body (13) exerts a force on the at least one spring element (16), which transmits the force directly or indirectly to the switching element (67) of the switch (63) in order to move it from the first switch position into the second switch position.

13. A parking brake device according to claim 12, **characterised in that** the at least one spring element (16) is supported on at least one rocker arm (4, 6) of a rocker arm mechanism (2), said at least one rocker arm being pivotably mounted on the valve housing, and that one side of said rocker arm mechanism is brought into contact with the detent element (13) while the other side is brought into contact with the switching element (67) of the switch (63) at least in the pivoting position (C) representing the "parking" operating state of the operating lever (1).

14. A parking brake device according to claim 13, **characterised in that** the at least one spring element (16) contains a compressible compression spring that is mounted preloaded between two rocker arms (4, 6) of the rocker arm mechanism (2), a first rocker arm (4) which is pivotable about a pivot spindle (8) and a second rocker arm (6) which is pivotable about a pivot spindle (8), the detent element (13) when engaged in the slotted-guide opening (37) coming into contact with the first rocker arm (4), which with a pivoting movement about its pivot spindle (8) exerts a pressure force on the at least one spring element (16), which transmits said pressure force to the second rocker arm (6), which with a pivoting movement about its pivot spindle (8) makes contact with the switching element (67) of the switch (63) in order to move it from the first switch position into the second switch position.

15. A parking brake device according to claim 14, **characterised in that** there is provided a stop device (22, 24) that prevents a pivoting movement of the second rocker arm (6) beyond a defined pivoting position that effects a clear switchover of the switch (63).

16. A parking brake device according to claim 15, **characterised in that** the second rocker arm (6) has a projection (22) that makes contact with a delimiting stop (24) on the valve housing when the detent body (13) is fully engaged in the slotted-guide opening (37).

17. A parking brake device according to one of claims 14 to 16, **characterised in that** the first and second rocker arms (4, 6) have a common pivot spindle (8).

18. A parking brake device according to any of claims 14 to 17, **characterised in that** a further spring element (20), which is coupled on one side to the valve housing and on the other side to the first rocker arm (4), preloads the first rocker arm (4) into contact with the detent body (13) on one side in the pivoting position (C) representing the "parking" operating state of the operating lever (1) and into contact with the second rocker arm (6) on the other side.

19. The parking brake device according to one of claims 14 to 18, **characterised in that** arranged on the first rocker arm (4) are two pegs (18, .18'), a first peg (18) having a support surface for the at least one spring element (16) on one side and a contact surface for the second rocker arm (6) on the other side, and a second peg (18') having a contact surface for the detent body (13).

20. A parking brake device according to claim 19, **characterised in that** the second rocker arm (6) has a frame-like recess (14) into which the first peg (18) of the first rocker arm (4) projects, the at least one spring element (16) being received between the first peg (18) and a support surface in the frame-like recess (14).

21. A parking brake device according to claim 19 or 20, **characterised in that** viewed in the direction of movement of the detent body (13) along the slotted guide (3) the dimension of the second peg (18') is configured such that the detent body (13) makes contact with the second peg (18') both in the pivoting position (C) representing the "parking" operating state of the rocker arm (1) and in a pivoting position (D) representing a "test position" operating state of the rocker arm (1), proceeding from the pivoting position (C) representing the "parking" operating state the detent body (13) being first moved radially inward beyond the engagement position in the slotted-guide opening (37) to below the level of the switching slotted guide (3) with further compression of the at least one spring element (16) and then, as a result of subsequent pivoting of the operating lever (1) into the pivoting position (D) representing the "test position" operating state, sliding along below the switching slotted guide (3).

22. A vehicle comprising a parking brake device according to any of the preceding claims.

## Revendications

1. Dispositif de frein de stationnement d'un véhicule, comprenant une soupape de frein de stationnement pneumatique, qui a un levier (1) de manoeuvre, guidé de manière pivotante en des positions (A, B, C, D) de pivotement différentes sur une coulisse (3) de commutation d'un corps de la soupape et relié à une pièce (5) de commande pour l'actionnement d'un mécanisme de soupape de frein de stationnement, comprenant un mécanisme d'encliquetage et de désencliquetage d'une pièce (13) d'encliquetage par rapport à une ouverture (37) de la coulisse (3) de commutation, au moins dans au moins l'une des positions (C) de pivotement représentant l'état de fonctionnement « stationnement » du levier (1) de manoeuvre, dans lequel il est prévu un premier dispositif (63) de capteur, qui coopère avec la pièce (13) d'encliquetage et qui est constitué de manière à produire, en fonction d'un encliquetage complet ou incomplet ou non effectué de la pièce (13) d'encliquetage dans l'ouverture (37) de la coulisse (3) de commutation, un premier signal électrique pour un dispositif (65) électronique d'exploitation, **caractérisé en ce que** le dispositif (65) électronique d'exploitation est constitué pour recevoir et traiter, outre le premier signal électrique, un deuxième signal électrique, qui, en fonction d'une possibilité d'accès existante ou inexistante du conducteur du véhicule ou levier de manoeuvre, est produit par au moins un deuxième dispositif (71) de capteur, le dispositif (65) électronique d'exploitation produisant, en fonction du premier signal' électrique et du deuxième signal électrique, un signal (69) d'avertissement, perceptible optiquement et/ou acoustiquement, ou un signal (69) de validation et/ou provoquant un serrage automatique d'au moins un actionneur (73) de frein de stationnement.

2. Dispositif de frein de stationnement suivant la revendication 1, **caractérisé en ce qu'**à une production du premier signal électrique et à une non production du premier signal électrique par le premier dispositif (63) de capteur, correspondent deux états de signal pouvant être distingués en ayant des niveaux de signal différents.

3. Dispositif de frein de stationnement suivant l'une des revendications précédentes, **caractérisé en ce que** le premier dispositif (63) de capteur comprend un capteur agissant en coopération sans contact avec la pièce (13) d'encliquetage.

4. Dispositif de frein de stationnement suivant la revendication 3, **caractérisé en ce que** le premier dispositif (63) de capteur comprend au moins un capteur de Hall.

5. Dispositif de frein de stationnement suivant la revendication 1 ou 2, **caractérisé en ce que** le premier dispositif de capteur comprend un interrupteur (63) électrique à organe (67) de commutation avec lequel la pièce (13) d'encliquetage peut venir en contact directement ou indirectement, dans lequel l'interrupteur (63) électrique est monté de manière à ce que l'organe (67) de commutation ne puisse pas, lorsque la pièce (13) d'encliquetage n'est pas encliquetée ou n'est pas encliquetée complètement dans l'ouverture (37) de la coulisse, faire passer l'interrupteur (63) d'une première position à une deuxième position mais, lorsque la pièce (13) d'encliquetage et encliquetée complètement dans l'ouverture (37) de la coulisse, le fait passer de la première position à la deuxième position.

6. Dispositif de frein de stationnement suivant l'une des revendications précédentes, **caractérisé en ce que** le premier dispositif (63) de capteur est constitué de manière à produire le premier signal électrique pour le dispositif (65) d'exploitation, si un encliquetage de la pièce (13) d'encliquetage dans l'ouverture (37) de la coulisse n'est pas détecté au moyen du premier dispositif (63) de capteur ou n'est pas effectué complètement, et à ne pas produire le premier signal électrique pour le dispositif (65) d'exploitation, si l'encliquetage complet de la pièce (13) d'encliquetage dans l'ouverture (37) de la coulisse est détecté au moyen du premier dispositif (63) de capteur.

7. Dispositif de frein de stationnement suivant la revendication 6, **caractérisé en ce que** le dispositif (65) électronique d'exploitation est constitué pour produire, dans le cas d'une production se trouvant interrompue et/ou d'une entrée se trouvant interrompue du premier signal électrique, un signal (69) de validation, perceptible optiquement et/ou acoustiquement, symbolisant la position de pivotement prise de manière stable du levier (1) de manoeuvre.

8. Dispositif de frein de stationnement suivant la revendication 6 ou 7, **caractérisé en ce que** le dispositif (65) électronique d'exploitation est constitué pour produire, dans le cas d'une production et/ou d'une entrée du premier signal électrique, un signal (69) d'avertissement perceptible optiquement et/ou acoustiquement.

9. Dispositif de frein de stationnement suivant l'une des revendications précédentes, **caractérisé en ce que** le deuxième signal électrique est produit en fonction d'une présence du conducteur sur un siège de conducteur et/ou d'une présence du conducteur dans une cabine de conducteur et/ou du fait qu'une ceinture de sécurité, associée au siège du conducteur, est bouclée ou ne l'est pas et/ou en fonction d'un état de fonctionnement de l'allumage du véhicule automobile et/ou en fonction d'un état de basculement d'une cabine de conduite basculable du véhicule et/ou de l'état d'un changement de vitesse du véhicule et/ou en fonction du signal d'un capteur de pression contrôlant la pression dans au moins un actionneur du frein de stationnement.

10. Dispositif de frein de stationnement suivant la revendication 9, **caractérisé en ce qu'**une production du deuxième signal électrique et une non production du deuxième signal électrique correspondent à deux états de signal pouvant se distinguer par des niveaux de signal différents.

11. Dispositif de frein de stationnement suivant l'une des revendications précédentes, **caractérisé en ce que** le dispositif (65) électronique d'exploitation comprend un micro-ordinateur.

12. Dispositif de frein de stationnement suivant la revendication 5, **caractérisé par** au moins un élément (16) de ressort, comme liaison active, entre l'organe (67) de commutation du premier dispositif (63) de capteur et la pièce (13) d'encliquetage, qui est réalisé et disposé de manière à ce que, lorsque la pièce (13) d'encliquetage est encliquetée complètement dans l'ouverture (37) de la coulisse, la pièce (13) d'encliquetage applique une force au au moins un élément (16) de ressort, qui transmet la force directement ou indirectement à l'organe (67) de commutation de l'interrupteur (63) pour le faire passer de la première position à la deuxième position.

13. Dispositif de frein de stationnement suivant la revendication 12, **caractérisé en ce que** le au moins un élément (16) de ressort est appuyé sur au moins un levier (4, 6) de basculement, monté pivotant sur le corps de la soupape, d'un mécanisme (2) à levier basculant, qui, au moins dans la position (C) de pivotement représentant l'état de fonctionnement « stationnement », du levier (1) de manoeuvre est mis en contact d'une part avec l'élément (13) d'encliquetage et d'autre part avec l'organe (67) de commutation de l'interrupteur (63).

14. Dispositif de frein de stationnement suivant la revendication 13, **caractérisé en ce que** le au moins un élément (16) de ressort comporte un ressort de compression pouvant être comprimé, qui est monté précontraint entre deux leviers (4, 6) de basculement du mécanisme (2) à levier de basculement, un premier levier (4) de basculement pivotant autour d'un axe (8) de pivotement et un deuxième levier (6) de basculement pivotant autour d'un axe (8) de pivotement, l'élément (13) d'encliquetage entrant, lors de l'encliquetage dans l'ouverture (37) de la coulisse, en contact avec le premier levier (4) de basculement, qui applique, en se déplaçant en pivotant autour de son axe (8) de pivotement, une force de pression au au moins un élément (16) de ressort, qui transmet la force de pression au deuxième levier (6) de basculement, qui, en se déplaçant en pivotant autour de son axe (8) de pivotement, entre en contact avec l'organe (67) de commutation de l'interrupteur (63) pour le faire passer de la première position à la deuxième position.

15. Dispositif de frein de stationnement suivant la revendication 14, **caractérisé en ce qu'**il est prévu un dispositif (22, 24) de butée, qui empêche un mouvement de pivotement du deuxième levier (6) de basculement au-delà d'une position de pivotement définie provoquant un changement de position univoque de l'interrupteur (63).

16. Dispositif de frein de stationnement suivant la revendication 15, **caractérisé en ce que** le deuxième levier (6) de basculement a une saillie (22), qui, lorsque la pièce (13) d'encliquetage est encliquetée complètement dans l'ouverture (37) de la coulisse, entre en contact avec une butée (24) de limitation du corps de la soupape.

17. Dispositif de frein de stationnement suivant l'une des revendications 14 à 16, **caractérisé en ce que** le premier et le deuxième leviers (4, 6) de basculement ont un axe (8) de basculement commun.

18. Dispositif de frein de stationnement suivant l'une des revendications 14 à 17, **caractérisé en ce qu'**un autre élément (20) de ressort, couplé d'une part au corps de la soupape et d'autre part au premier levier (4) de basculement, précontraint le premier levier (4) de basculement d'une part dans la position (C) de basculement, représentant l'état de fonctionnement « stationnement », du levier (1) de manoeuvre, en contact avec la pièce (13) d'encliquetage et d'autre part en contact avec le deuxième levier (6) de basculement.

19. Dispositif de frein de stationnement suivant l'une des revendications 14 à 18, **caractérisé en ce que**, sur le premier levier (4) de basculement, sont montés deux tenons (18, 18'), dont un premier tenon (18) a d'une part une surface d'appui pour le au moins un élément (16) de ressort et d'autre part une surface de contact pour le deuxième levier (6) de basculement et dont un deuxième tenon (18') a une surface de contact pour la pièce (13) d'encliquetage.

20. Dispositif de frein de stationnement suivant la revendication 19, **caractérisé en ce que** le deuxième levier (6) de basculement a un évidement (14) en forme de cadre, dans lequel pénètre le premier tenon (18) du premier levier (4) de basculement, le au moins un élément (16) de ressort étant reçu entre le premier tenon (18) et une surface d'appui dans l'évidement (14) en forme de cadre.

21. Dispositif de frein de stationnement suivant la revendication 19 ou 20, **caractérisé en ce que**, dans la direction de déplacement de la pièce (13) d'encliquetage, considéré suivant la coulisse (3), la dimension du deuxième tenon (18') est telle que la pièce (13) d'encliquetage entre en contact avec le deuxième tenon (8') tant dans la position (C) de basculement, représentant l'état de fonctionnement « stationnement » du levier (1) de manoeuvre, qu'également dans une position (D) de basculement, représentant un état de fonctionnement « position de test », du levier (1) de manoeuvre, dans lequel, à partir de la position (C) de pivotement, représentant l'état de fonctionnement « stationnement, la pièce (13) d'encliquetage est mise, en continuant à comprimer le au moins un élément (16) de ressort, d'abord au-delà de la position d'encliquetage dans l'ouverture (37) de la coulisse, vers l'intérieur radialement en dessous du niveau de la coulisse (3) et ensuite, par pivotement venant ensuite du levier (1) de manoeuvre, glisse en dessous de la coulisse (3) pour venir dans la position (D) de pivotement représentant l'état de fonction « position de test ».

22. Véhicule comportant un dispositif de frein de stationnement suivant l'une des revendications précédentes.
